(19) Europäisches Patentamt
European Patent Office
Office européen des brevets

(11) EP 3 778 686 A1

(12) # EUROPEAN PATENT APPLICATION
published in accordance with Art. 153(4) EPC

(43) Date of publication:
**17.02.2021 Bulletin 2021/07**

(21) Application number: **19776740.3**

(22) Date of filing: **22.03.2019**

(51) Int Cl.:
***C08G 18/08*** (2006.01) ***C08G 18/28*** (2006.01)
***C08G 18/79*** (2006.01) ***C09D 5/02*** (2006.01)
***C09D 7/63*** (2018.01) ***C09D 175/04*** (2006.01)

(86) International application number:
**PCT/JP2019/012086**

(87) International publication number:
**WO 2019/188781 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2018 JP 2018062036**

(71) Applicant: **Asahi Kasei Kabushiki Kaisha**
**Tokyo 1000006 (JP)**

(72) Inventor: **TSUJITA Junya**
**Tokyo 100-0006 (JP)**

(74) Representative: **Strehl Schübel-Hopf & Partner**
**Maximilianstrasse 54**
**80538 München (DE)**

(54) **POLYISOCYANATE COMPOSITION, COATING COMPOSITION AND COATING SUBSTRATE**

(57) A polyisocyanate composition includes a polyisocyanate containing a sulfonic acid anion group in a molecule, a tertiary ammonium cation of an amine compound, and a uretdione dimer and isocyanurate trimer of a diisocyanate monomer,
wherein the tertiary ammonium cation of the amine compound includes a tertiary ammonium cation of one or more amine compounds represented by general formula (1),
a content of the uretdione dimer is 2.0% by mass or more and 20.0% by mass or less with respect to a total mass of the composition, and
a content of a uretdione dimer containing a sulfonic acid anion group in a molecule is 0.15% by mass or less with respect to a total mass of the polyisocyanate containing a sulfonic acid anion group in a molecule, the uretdione dimer and the isocyanurate trimer.

[Chemical Formula 1]

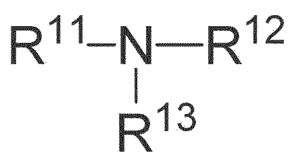

(1)

EP 3 778 686 A1

## Description

[Technical Field]

The present invention relates to a polyisocyanate composition, a coating composition, and a coated substrate. Priority is claimed on Japanese Patent Application No. 2018-062036, filed March 28, 2018, the content of which is incorporated herein by reference.

[Background Art]

In recent years, from the viewpoint of environmental protection, it has been desired to convert normal temperature-crosslinkable two-component urethane coating compositions, which have conventionally been used as solvent-based coating materials, to water-based compositions. However, the polyisocyanate used as a curing agent in the two-component urethane coating composition is difficult to disperse in water and easily reacts with water to generate carbon dioxide, which is a problem. For this reason, the development of polyisocyanates having high emulsifying properties and capable of suppressing the reaction between isocyanate groups and water in a water-dispersed state is underway.
Patent Document 1 discloses a reaction product of a polyisocyanate compound and a compound having at least one sulfonic acid group and an isocyanate reactive group.
Patent Documents 2 and 3 disclose polyisocyanate compositions containing a modified polyisocyanate obtained by reacting an amine salt of a sulfonic acid having a hydroxy group with a polyisocyanate.
Patent Documents 4 and 5 disclose modified polyisocyanates obtained by reacting an aminosulfonic acid having a specific structure with a polyisocyanate.

[Citation List]

[Patent Documents]

[Patent Document 1] Japanese Unexamined Patent Application, First Publication No. H8-176267
[Patent Document 2] Japanese Unexamined Patent Application, First Publication No. 2015-205957
[Patent Document 3] Japanese Unexamined Patent Application, First Publication No. 2016-017157
[Patent Document 4] Japanese Patent No. 4806511
[Patent Document 5] International Patent Publication No. 2015/035673

[Summary of Invention]

[Technical Problem]

Water-based two-component urethane coating compositions are used for the coating of furniture and building materials, woodwork for housing, wooden floors for housing and school facilities, trains and construction machines, agricultural vehicles, and the like. For these applications, there is a demand for a polyisocyanate composition capable of obtaining a coating film having excellent appearance, hardness, water resistance and stain resistance.
Patent Documents 1 to 3 disclose that the dispersibility in water is improved by using a polyisocyanate containing a sulfonic acid group. However, there has been a problem that turbidity occurs in the synthetic product due to poor compatibility between the sulfonic acid group and the polyisocyanate. Since the appearance of the coating film is deteriorated and the hydrophilicity is also reduced if a highly organic sulfonic acid or an amine salt of a highly organic sulfonic acid is used in order to improve the turbidity, there have also been problems that the sulfonic acid or the amine salt of a sulfonic acid has to be modified to a large extent, and the hardness of the coating film is reduced.
Patent Documents 4 and 5 disclose that the hardness of the coating film and the solvent resistance of the coating film can be improved by using a modified polyisocyanate obtained by a reaction with an aminosulfonic acid having a specific structure. On the other hand, since the hydrophobicity of the aminosulfonic acid having a specific structure is relatively high, there has been a problem that the appearance of the coating film is deteriorated. In addition, despite the relatively high hydrophobicity of the aminosulfonic acid, there has also been a problem that the water resistance and the stain resistance are poor.
As described above, it has been difficult for any of the polyisocyanate compositions disclosed in Patent Documents 1 to 5 to satisfy the requirements of achieving all of the appearance, hardness, water resistance, and stain resistance when formed into a coating film.

The present invention has been made in view of the above circumstances, and provides a polyisocyanate composition capable of obtaining excellent dispersibility when dispersed in water or a main agent containing water, and having excellent appearance, hardness, water resistance and stain resistance when formed into a coating film, a coating composition containing the polyisocyanate composition, and a coated substrate using the coating composition.

[Solution to Problem]

That is, the present invention includes the following aspects.

A polyisocyanate composition according to a first aspect of the present invention is a polyisocyanate composition including a polyisocyanate containing a sulfonic acid anion group in a molecule, a tertiary ammonium cation of an amine compound, a uretdione dimer of a diisocyanate monomer, and an isocyanurate trimer of a diisocyanate monomer, wherein the tertiary ammonium cation of the aforementioned amine compound includes a tertiary ammonium cation of one or more amine compounds represented by the following general formula (1), a content of the aforementioned uretdione dimer is 2.0% by mass or more and 20.0% by mass or less with respect to a total mass of the aforementioned composition, and a content of a uretdione dimer containing a sulfonic acid anion group in a molecule is 0.15% by mass or less with respect to a total mass of the aforementioned polyisocyanate containing a sulfonic acid anion group in a molecule, the aforementioned uretdione dimer and the aforementioned isocyanurate trimer.

[Chemical Formula 1]

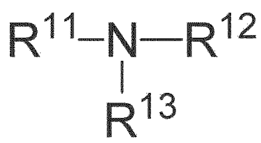

(1)

(In the general formula (1), $R^{11}$, $R^{12}$ and $R^{13}$ are each independently a hydrocarbon group having 1 to 10 carbon atoms which may contain an ether bond; at least one member selected from the group consisting of $R^{11}$, $R^{12}$ and $R^{13}$ may include a ring structure, and two or more members selected from the group consisting of $R^{11}$, $R^{12}$, and $R^{13}$ may be bonded to each other to form a ring structure; and the aforementioned ring structure is an aromatic ring, a cycloalkyl group having 5 or 6 carbon atoms, a 5- or 6-membered ring in which $R^{11}$ and $R^{12}$ are bonded to each other, or a multiple ring composed of multiple members in which $R^{11}$, $R^{12}$ and $R^{13}$ are bonded to each other.)

In the polyisocyanate composition according to the first aspect described above, the tertiary ammonium cation of the aforementioned amine compound may contain, in place of the tertiary ammonium cation of one or more amine compounds represented by the aforementioned general formula (1), a tertiary ammonium cation of one or more amine compounds represented by the following general formula (2) and a tertiary ammonium cation of one or more amine compounds represented by the following general formula (3), or tertiary ammonium cations of two or more amine compounds represented by the aforementioned general formula (2) in which total numbers of carbon atoms of $R^{21}$, $R^{22}$ and $R^{23}$ are different from each other.

[Chemical Formula 2]

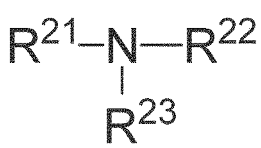

(2)

(In the general formula (2), $R^{21}$, $R^{22}$ and $R^{23}$ are each independently a hydrocarbon group having 1 to 6 carbon atoms which may contain an ether bond; at least one member selected from the group consisting of $R^{21}$, $R^{22}$ and $R^{23}$ may include a ring structure, and two or more members selected from the group consisting of $R^{21}$, $R^{22}$ and $R^{23}$ may be bonded to each other to form a ring structure; the aforementioned ring structure is an aromatic ring, a cycloalkyl group having 5 or 6 carbon atoms, a 5- or 6-membered ring in which $R^{21}$ and $R^{22}$ are bonded to each other, or a multiple ring composed of multiple members in which $R^{21}$, $R^{22}$ and $R^{23}$ are bonded to each other; and a total number of carbon atoms of $R^{21}$, $R^{22}$ and $R^{23}$ is 8 or less.)

[Chemical Formula 3]

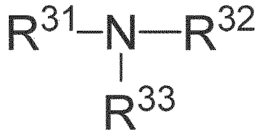

(3)

(In the general formula (3), $R^{31}$, $R^{32}$ and $R^{33}$ are each independently a hydrocarbon group having 1 to 19 carbon atoms which may contain an ether bond; at least one member selected from the group consisting of $R^{31}$, $R^{32}$ and $R^{33}$ may include a ring structure, and two or more members selected from the group consisting of $R^{31}$, $R^{32}$ and $R^{33}$ may be bonded to each other to form a ring structure; the aforementioned ring structure is an aromatic ring, a cycloalkyl group having 5 or 6 carbon atoms, a 5- or 6-membered ring in which $R^{31}$ and $R^{32}$ are bonded to each other, or a multiple ring composed of multiple members in which $R^{31}$, $R^{32}$ and $R^{33}$ are bonded to each other; and a total number of carbon atoms of $R^{31}$, $R^{32}$ and $R^{33}$ is 9 or more.)

In the polyisocyanate composition according to the first aspect described above, the aforementioned polyisocyanate containing a sulfonic acid anion group in a molecule is obtained by reacting one or more amine salts of a sulfonic acid having an active hydrogen group with a polyisocyanate, and the aforementioned amine salt of a sulfonic acid having an active hydrogen group may be a salt of a sulfonic acid having an active hydrogen group and one or more amine compounds represented by the aforementioned general formula (1).

In the polyisocyanate composition according to the first aspect described above, the aforementioned polyisocyanate containing a sulfonic acid anion group in a molecule is obtained by reacting two or more amine salts of a sulfonic acid having an active hydrogen group with a polyisocyanate, and the aforementioned amine salt of a sulfonic acid having an active hydrogen group may be a salt of a sulfonic acid having an active hydrogen group with one or more amine compounds represented by the aforementioned general formula (2) and one or more amine compounds represented by the aforementioned general formula (3), or a salt of a sulfonic acid having an active hydrogen group with two or more amine compounds represented by the aforementioned general formula (2).

In the polyisocyanate composition according to the first aspect described above, the aforementioned active hydrogen group may be a hydroxy group.

In the polyisocyanate composition according to the first aspect described above, the aforementioned sulfonic acid having an active hydrogen group may be a compound represented by the following general formula (4).

[Chemical Formula 4]

$$HO\text{-}R^{41}\text{-}SO_3H \qquad (4)$$

(In the general formula (4), $R^{41}$ is a hydrocarbon group having 1 to 10 carbon atoms which may contain at least one member selected from the group consisting of a hydroxy group, an ether bond, an ester bond, a carbonyl group, and an imino group; $R^{41}$ may include a ring structure; and the aforementioned ring structure is an aromatic ring, a 5- or 6-membered ring containing two nitrogen atoms, or a 5- or 6-membered ring containing a nitrogen atom and an oxygen atom.)

In the polyisocyanate composition according to the first aspect described above, the aforementioned polyisocyanate containing a sulfonic acid anion group in a molecule may be obtained by reacting a sulfonic acid having an active hydrogen group with a polyisocyanate.

In the polyisocyanate composition according to the first aspect described above, the aforementioned active hydrogen group may be an amino group.

In the polyisocyanate composition according to the first aspect described above, the aforementioned sulfonic acid having an active hydrogen group may be a compound represented by the following general formula (5).

[Chemical Formula 5]

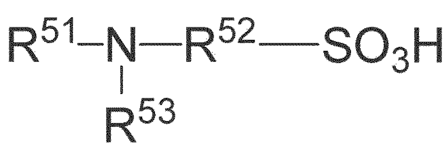

(5)

(In the general formula (5), $R^{51}$ and $R^{53}$ are each independently a hydrogen atom or a hydrocarbon group having 1 to 12 carbon atoms which may contain a hydroxy group; at least one of $R^{51}$ and $R^{53}$ is a hydrogen atom; and $R^{52}$ is a hydrocarbon group having 1 to 12 carbon atoms which may contain a hydroxy group.)

In the polyisocyanate composition according to the first aspect described above, the amine compound represented by the aforementioned general formula (1) and the amine compound represented by the aforementioned general formula (3) may be at least one member selected from the group consisting of an amine compound containing a chain aliphatic hydrocarbon group and an amine compound containing a cyclic aliphatic hydrocarbon group, and the amine compound represented by the aforementioned general formula (2) may be at least one member selected from the group consisting of a cyclic amine compound, an amine compound containing a chain aliphatic hydrocarbon group, and an amine compound containing a cyclic aliphatic hydrocarbon group.

In the polyisocyanate composition according to the first aspect described above, the aforementioned polyisocyanate may be at least one member selected from the group consisting of an aliphatic polyisocyanate, an alicyclic polyisocyanate, and an araliphatic polyisocyanate.

A method for producing a polyisocyanate composition according to a second aspect of the present invention is a method for reacting: (A1) one or more amine salts of a sulfonic acid having an active hydrogen group and a polyisocyanate; or (B1) a sulfonic acid having an active hydrogen group, a polyisocyanate and one or more amine compounds represented by the following general formula (1), so that a ratio of a molar amount of isocyanate groups with respect to a molar amount of active hydrogen groups is within a range of 2 to 400, wherein the aforementioned amine salt of a sulfonic acid having an active hydrogen group is a salt of the aforementioned sulfonic acid having an active hydrogen group and one or more amine compounds represented by the aforementioned general formula (1).

[Chemical Formula 6]

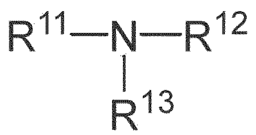

(1)

(In the general formula (1), $R^{11}$, $R^{12}$ and $R^{13}$ are each independently a hydrocarbon group having 1 to 10 carbon atoms which may contain an ether bond; at least one member selected from the group consisting of $R^{11}$, $R^{12}$ and $R^{13}$ may include a ring structure, and two or more members selected from the group consisting of $R^{11}$, $R^{12}$, and $R^{13}$ may be bonded to each other to form a ring structure; and the aforementioned ring structure is an aromatic ring, a cycloalkyl group having 5 or 6 carbon atoms, a 5- or 6-membered ring in which $R^{11}$ and $R^{12}$ are bonded to each other, or a multiple ring composed of multiple members in which $R^{11}$, $R^{12}$ and $R^{13}$ are bonded to each other.)

A method for producing a polyisocyanate composition according to the third aspect of the present invention is a method for reacting: (A2) two or more amine salts of a sulfonic acid having an active hydrogen group with a polyisocyanate; or (B2) a sulfonic acid having an active hydrogen group, a polyisocyanate, and one or more amine compounds represented by the following general formula (2) and one or more amine compounds represented by the following general formula (3), or two or more amine compounds represented by the aforementioned general formula (2) in which total numbers of carbon atoms of $R^{21}$, $R^{22}$ and $R^{23}$ are different from each other, so that a ratio of a molar amount of isocyanate groups with respect to a molar amount of active hydrogen groups is within a range of 2 to 400, wherein the aforementioned amine salt of a sulfonic acid having an active hydrogen group is a salt of the aforementioned sulfonic acid having an active hydrogen group and one or more amine compounds represented by the aforementioned general formula (2) and one or more amine compounds represented by the aforementioned general formula (3), or a salt of the aforementioned sulfonic acid having an active hydrogen group and two or more amine compounds represented by the aforementioned general formula (2).

[Chemical Formula 7]

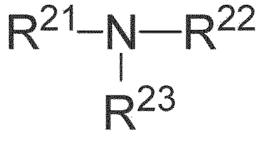

(2)

(In the general formula (2), $R^{21}$, $R^{22}$ and $R^{23}$ are each independently a hydrocarbon group having 1 to 6 carbon atoms which may contain an ether bond; at least one member selected from the group consisting of $R^{21}$, $R^{22}$ and $R^{23}$ may include a ring structure, and two or more members selected from the group consisting of $R^{21}$, $R^{22}$ and $R^{23}$ may be bonded to each other to form a ring structure; the aforementioned ring structure is an aromatic ring, a cycloalkyl group having 5 or 6 carbon atoms, a 5- or 6-membered ring in which $R^{21}$ and $R^{22}$ are bonded to each other, or a multiple ring composed of multiple members in which $R^{21}$, $R^{22}$ and $R^{23}$ are bonded to each other; and a total number of carbon atoms of $R^{21}$, $R^{22}$ and $R^{23}$ is 8 or less.)

[Chemical Formula 8]

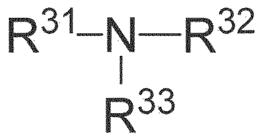

(3)

(In the general formula (3), $R^{31}$, $R^{32}$ and $R^{33}$ are each independently a hydrocarbon group having 1 to 19 carbon atoms which may contain an ether bond; at least one member selected from the group consisting of $R^{31}$, $R^{32}$ and $R^{33}$ may include a ring structure, and two or more members selected from the group consisting of $R^{31}$, $R^{32}$ and $R^{33}$ may be bonded to each other to form a ring structure; the aforementioned ring structure is an aromatic ring, a cycloalkyl group having 5 or 6 carbon atoms, a 5- or 6-membered ring in which $R^{31}$ and $R^{32}$ are bonded to each other, or a multiple ring composed of multiple members in which $R^{31}$, $R^{32}$ and $R^{33}$ are bonded to each other; and a total number of carbon atoms of $R^{31}$, $R^{32}$ and $R^{33}$ is 9 or more.)

In the method for producing a polyisocyanate composition according to the second aspect or the third aspect, the aforementioned active hydrogen group may be at least one member selected from the group consisting of an amino group and a hydroxy group.

In the method for producing a polyisocyanate composition according to the second aspect or the third aspect, the aforementioned sulfonic acid having an active hydrogen group may be a compound represented by the following general formula (4).

[Chemical Formula 9]

$$HO\text{-}R^{41}\text{-}SO_3H \qquad (4)$$

(In the general formula (4), $R^{41}$ is a hydrocarbon group having 1 to 10 carbon atoms which may contain at least one member selected from the group consisting of a hydroxy group, an ether bond, an ester bond, a carbonyl group, and an imino group; $R^{41}$ may include a ring structure; and the aforementioned ring structure is an aromatic ring, a 5- or 6-membered ring containing two nitrogen atoms, or a 5- or 6-membered ring containing a nitrogen atom and an oxygen atom.)

In the method for producing a polyisocyanate composition according to the third aspect described above, a ratio of a molar amount of the amine compound represented by the aforementioned general formula (3) with respect to a molar amount of the amine compound represented by the aforementioned general formula (2) in the aforementioned amine salt of a sulfonic acid may be 10/90 or more and 90/10 or less.

A coating composition according to a fourth aspect of the present invention includes the polyisocyanate composition according to the first aspect described above.

A coated substrate according to a fifth aspect of the present invention is coated with the coating composition according to the fourth aspect described above.

[Advantageous Effects of Invention]

The polyisocyanate composition of the above aspect has excellent dispersibility in water or a main agent containing water, and is capable of forming a coating film having excellent appearance, hardness, water resistance, and stain resistance. According to the coating composition of the above aspect, a coating film having excellent appearance, hardness, water resistance, and stain resistance can be obtained. The coated substrate of the above aspect is excellent in appearance, hardness, water resistance and stain resistance.

[Description of Embodiments]

Hereinafter, an embodiment for carrying out the present invention (hereinafter, referred to as "the present embodiment") will be described in detail. It should be noted that the present invention is not limited to the present embodiment described below. The present invention can be appropriately modified and implemented within the scope and spirit of the invention.

<<Polyisocyanate composition>>

The polyisocyanate composition of the present embodiment includes a polyisocyanate containing a sulfonic acid anion group in a molecule, a tertiary ammonium cation of an amine compound, a uretdione dimer of a diisocyanate monomer, and an isocyanurate trimer of a diisocyanate monomer.
Further, in the polyisocyanate composition of the present embodiment, the tertiary ammonium cation of the aforementioned amine compound includes a tertiary ammonium cation of one or more amine compounds represented by the following general formula (1) (hereinafter, referred to as "amine compound (1)" in some cases).
Moreover, in the polyisocyanate composition of the present embodiment, the content of the aforementioned uretdione dimer is 2.0% by mass or more and 20.0% by mass or less with respect to the total mass of the aforementioned composition.
Furthermore, in the polyisocyanate composition of the present embodiment, the content of the uretdione dimer containing a sulfonic acid anion group in the molecule is 0.15% by mass or less with respect to the total mass of the aforementioned polyisocyanate containing a sulfonic acid anion group in the molecule, the aforementioned uretdione dimer and the aforementioned isocyanurate trimer.

[Chemical Formula 10]

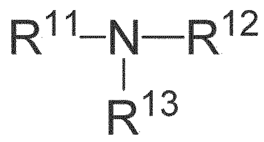

(1)

(In the general formula (1), $R^{11}$, $R^{12}$ and $R^{13}$ are each independently a hydrocarbon group having 1 to 10 carbon atoms which may contain an ether bond; at least one member selected from the group consisting of $R^{11}$, $R^{12}$ and $R^{13}$ may include a ring structure, and two or more members selected from the group consisting of $R^{11}$, $R^{12}$, and $R^{13}$ may be bonded to each other to form a ring structure; and the aforementioned ring structure is an aromatic ring, a cycloalkyl group having 5 or 6 carbon atoms, a 5- or 6-membered ring in which $R^{11}$ and $R^{12}$ are bonded to each other, or a multiple ring composed of multiple members in which $R^{11}$, $R^{12}$ and $R^{13}$ are bonded to each other.)
The polyisocyanate composition of the present embodiment contains a polyisocyanate containing a sulfonic acid anion group in the molecule and a tertiary ammonium cation of one or more amine compounds. As a result, as shown in Examples described later, a coating film having both excellent appearance and hardness can be obtained while maintaining high water dispersibility of the polyisocyanate composition of the present embodiment.
In addition, the polyisocyanate composition of the present embodiment contains a uretdione dimer having a content within the above range. As a result, as shown in Examples described later, a coating film having both excellent appearance, hardness and water resistance can be obtained.
Further, in the polyisocyanate composition of the present embodiment, because the content of the uretdione dimer containing a sulfonic acid anion group in a molecule is within the above range, a coating film having both excellent water resistance and stain resistance can be obtained.
It should be noted that the terms "uretdione dimer of diisocyanate monomer" and "isocyanurate trimer of diisocyanate monomer" as used herein correspond to those that do not contain a sulfonic acid anion group in the molecule (unmodified uretdione dimers and isocyanurate trimers). Further, the "polyisocyanate containing a sulfonic acid anion group in the molecule" includes a uretdione dimer containing a sulfonic acid anion group in the molecule and an isocyanurate trimer containing a sulfonic acid anion group in the molecule.

<Isocyanate component>

It should be noted that the polyisocyanate composition of the present embodiment usually contains, as an isocyanate component, an unmodified polyisocyanate, that is, a polyisocyanate containing no sulfonic acid anion group

in the molecule. Further, unless otherwise specified, various characteristics of the polyisocyanate composition of the present embodiment described later are characteristics in a state of including a polyisocyanate containing a sulfonic acid anion group in a molecule and an unmodified polyisocyanate (a polyisocyanate contained no sulfonic acid anion group in a molecule).

Moreover, in the polyisocyanate composition of the present embodiment, the ratio of the unmodified polyisocyanate and the polyisocyanate containing a sulfonic acid anion group in the molecule can be calculated from, for example, the ratio of isocyanate groups containing sulfonic acid anion groups in the molecule with respect to 100 moles of the isocyanate group of the raw material polyisocyanate.

[Polyisocyanate containing sulfonic acid anion group in the molecule]

The polyisocyanate containing a sulfonic acid anion group in the molecule contained in the polyisocyanate composition of the present embodiment is a reactant obtained by reacting a sulfonic acid having an active hydrogen group or an amine salt thereof with a polyisocyanate.

(Polyisocyanate)

Although the polyisocyanate used for the polyisocyanate containing a sulfonic acid anion group in the molecule is not particularly limited, examples thereof include a polyisocyanate derived from at least one of diisocyanates selected from the group consisting of an aliphatic diisocyanate, an alicyclic diisocyanate and an aromatic diisocyanate. The polyisocyanate used for the polyisocyanate containing a sulfonic acid anion group in the molecule is preferably at least one member selected from the group consisting of an aliphatic polyisocyanate, an alicyclic polyisocyanate, and an aromatic polyisocyanate from the viewpoint of industrial availability.

Although the aliphatic diisocyanate is not particularly limited, examples thereof include 1,4-diisocyanatobutane, 1,5-diisocyanatopentane, ethyl (2,6-diisocyanato) hexanoate, 1,6-diisocyanatohexane (hereinafter, also referred to as "HDI"), 1,9-diisocyanatononane, 1,12-diisocyanatododecane, and 2,2,4- or 2,4,4-trimethyl-1,6-diisocyanatohexane.

Although the alicyclic diisocyanate is not particularly limited, examples thereof include 1,3- or 1,4-bis(isocyanatomethyl)cyclohexane (hereinafter, also referred to as "hydrogenated XDI"), 1,3-or 1,4-diisocyanatocyclohexane, 3,5,5-trimethyl 1-isocyanato-3-(isocyanatomethyl)cyclohexane (hereinafter, also referred to as "IPDI"), 4-4'-diisocyanato-dicyclohexylmethane (hereinafter, also referred to as "hydrogenated MDI"), and 2,5- or 2,6-diisocyanatomethylnorbornane.

Although the aromatic diisocyanate is not particularly limited, examples thereof include xylylene diisocyanate, tolylene diisocyanate, and diphenylmethane diisocyanate.

Among them, HDI, IPDI, hydrogenated XDI or hydrogenated MDI is preferable as the diisocyanate.

Although the polyisocyanate derived from the above diisocyanate is not particularly limited, examples thereof include polyisocyanates shown in the following (a) to (h), and the like.

(a) a polyisocyanate having a uretdione group obtained by cyclizing and dimerizing two isocyanate groups;
(b) a polyisocyanate having an isocyanurate group or an iminooxadiazinedione group obtained by cyclizing and trimerizing three isocyanate groups;
(c) a polyisocyanate having a biuret group obtained by reacting three isocyanate groups with one molecule of water;
(d) a polyisocyanate having an oxadiazinetrione group obtained by reacting two isocyanate groups with one molecule of carbon dioxide;
(e) a polyisocyanate having a plurality of urethane groups obtained by reacting one isocyanate group with one hydroxy group;
(f) a polyisocyanate having an allophanate group obtained by reacting two isocyanate groups with one hydroxy group;
(g) a polyisocyanate having an acylurea group obtained by reacting one isocyanate group with one carboxy group;
(h) a polyisocyanate having a urea group obtained by reacting one isocyanate group with one primary or secondary amine.

The polyisocyanate composition of the present embodiment contains a uretdione dimer of the above diisocyanate and an isocyanurate trimer of the above diisocyanate. That is, the polyisocyanate composition of the present embodiment includes the above (a) and the above (b). Since the polyisocyanate composition of the present embodiment has an isocyanurate group, it exhibits excellent hardness, water resistance, drying properties, and weather resistance when formed into a coating film.

Further, in the polyisocyanate composition of the present embodiment, the uretdione group and the isocyanurate group may be included in the same polyisocyanate molecule or may be included in different polyisocyanate molecules, but preferably they are included in different polyisocyanate molecules.

In addition, the polyisocyanate used for the polyisocyanate containing a sulfonic acid anion group in the molecule may contain an aliphatic triisocyanate. Examples of the aliphatic triisocyanate include 1,3,6-triisocyanatohexane, 1,8-diisocyanato-4-isocyanatomethyloctane, and 2-isocyanatoethyl-2,6-diisocyanato-hexanoate.
Further, these polyisocyanates may be modified with a vinyl polymer having a nonionic hydrophilic group such as an alkoxypolyalkylene glycol, or a hydroxy group and a nonionic hydrophilic group.
In addition, one of these polyisocyanates may be used alone or by combining two or more types.

(Method for producing polyisocyanate)

(I) Method for producing polyisocyanate containing isocyanurate group

Although a method for producing a polyisocyanate containing an isocyanurate group is not particularly limited, examples thereof include a method for carrying out an isocyanurate-forming reaction of a diisocyanate with a catalyst or the like, terminating the reaction when a predetermined conversion rate is reached and removing an unreacted diisocyanate.
Although the catalyst to be used in the above isocyanurate-forming reaction is not particularly limited, a catalyst showing basicity is preferable, and specific examples thereof include a hydroxide and organic weak acid salt of a tetraalkylammonium, a hydroxide and organic weak acid salt of a hydroxyalkylammonium, an alkali metal salt of an alkyl carboxylic acid, a metal alcoholate, an aminosilyl group-containing compound, a Mannich base, a combination of a tertiary amine and an epoxy compound, and a phosphorus-based compound.
Examples of the tetraalkylammonium include tetramethylammonium and tetraethylammonium.
Examples of the organic weak acid include acetic acid and capric acid.
Examples of the hydroxyalkylammonium include trimethylhydroxypropylammonium, trimethylhydroxyethylammonium, triethylhydroxypropylammonium, and triethylhydroxyethylammonium.
Examples of the alkyl carboxylic acid include acetic acid, caproic acid, octylic acid, and myristic acid.
Examples of the alkali metal salt include tin, zinc, and lead.
Examples of the metal alcoholate include sodium alcoholate and potassium alcoholate.
Examples of the aminosilyl group-containing compound include hexamethyldisilazane and the like.
Examples of the phosphorus-based compound include tributylphosphine and the like.
The amount of these catalysts used is preferably 10 ppm or more and 1.0% or less with respect to the total mass of diisocyanate and alcohol as raw materials. In addition, in order to terminate the isocyanurate-forming reaction, the catalyst may be inactivated by addition of an acidic substance for neutralizing the catalyst, thermal decomposition, chemical decomposition, or the like. Examples of the acidic substance for neutralizing the catalyst include phosphoric acid and acidic phosphate esters.
The yield of polyisocyanate generally tends to be 10% by mass or more and 70% by mass or less. Polyisocyanates obtained in higher yields tend to have higher viscosities. The yield can be measured by the method described in Examples described later.
The reaction temperature of the isocyanurate-forming reaction is not particularly limited, but is preferably 50°C or more and 200°C or less, and more preferably 50°C or more and 150°C or less. When the reaction temperature is equal to or higher than the above lower limit value, the reaction tends to proceed more easily, and when the reaction temperature is equal to or lower than the above upper limit value, a side reaction that causes coloration tends to be suppressed.
After completion of the isocyanurate-forming reaction, it is preferable to remove unreacted diisocyanate monomers by a thin film evaporator, extraction, or the like. Even if the polyisocyanate contains an unreacted diisocyanate, it contains a diisocyanate in an amount of preferably 3.0% by mass or less, more preferably 1.0% by mass or less and still more preferably 0.5% by mass or less. When the concentration of residual unreacted diisocyanate monomers is within the above range, curability tends to be superior.

(II) Method for producing polyisocyanate containing uretdione group

Although a method for producing a polyisocyanate containing a uretdione group is not particularly limited, examples thereof include a method for carrying out a uretdione-forming reaction of a diisocyanate with a uretdione-forming catalyst or the like.
Examples of the uretdione-forming reaction catalyst include, but are not limited to, tertiary phosphines such as trialkylphosphines, tris(dialkylamino)phosphines, and cycloalkylphosphines.
Examples of the trialkylphosphine include tri-n-butylphosphine and tri-n-octylphosphine.
Examples of the tris(dialkylamino)phosphine include tris(dialkylamino)phosphines such as tris-(dimethylamino)phosphine.

Examples of the cycloalkylphosphine include cyclohexyl-di-n-hexylphosphine and the like.

Many of these compounds also promote an isocyanurate-forming reaction at the same time to produce an isocyanurate-type polyisocyanate in addition to the uretdione group-containing polyisocyanate.

When the desired yield is obtained, the uretdione-forming reaction is stopped by adding a deactivator of the uretdione-forming reaction catalyst such as phosphoric acid or methyl para-toluenesulfonate.

Alternatively, a uretdione group-containing polyisocyanate can also be obtained by heating a diisocyanate monomer without using the above uretdione-forming reaction catalyst.

When the above uretdione-forming reaction catalyst is not used, the heating temperature can be set to 120°C or higher, preferably 150°C or higher and 170°C or lower. Further, the heating time can be set to 1 hour or more and 4 hours or less.

(Sulfonic acid having active hydrogen group)

In the sulfonic acid having an active hydrogen group used for the polyisocyanate containing a sulfonic acid anion group in the molecule, examples of the active hydrogen group include an amino group, a carboxy group, and a hydroxy group. Among them, the active hydrogen group is preferably at least one member selected from the group consisting of an amino group and a hydroxy group.

(Sulfonic acid (4))

In the case where the active hydrogen group is a hydroxy group, examples of the sulfonic acid having a hydroxy group include a compound represented by the following general formula (4) (hereinafter abbreviated as "sulfonic acid (4)").

[Chemical Formula 11]

$$HO\text{-}R^{41}\text{-}SO_3H \qquad (4)$$

In the aforementioned general formula (4), $R^{41}$ is a hydrocarbon group having 1 to 10 carbon atoms which may contain at least one member selected from the group consisting of a hydroxy group, an ether bond, an ester bond, a carbonyl group, and an imino group. $R^{41}$ may include a ring structure. The aforementioned ring structure is an aromatic ring, a 5- or 6-membered ring containing two nitrogen atoms, or a 5- or 6-membered ring containing a nitrogen atom and an oxygen atom.

- $R^{41}$

In the general formula (4), $R^{41}$ represents a hydrocarbon group having 1 to 10 carbon atoms which may contain at least one member selected from the group consisting of a hydroxy group, an ester bond (-COO-), an ether bond (-O-), a carbonyl group (-C(=O)-), an imino group (-NR-) and a ring structure.

The hydrocarbon group having 1 to 10 carbon atoms may be a divalent aliphatic hydrocarbon group having 1 to 10 carbon atoms, or a divalent aromatic hydrocarbon group having 6 to 10 carbon atoms. The divalent aliphatic hydrocarbon group having 1 to 10 carbon atoms is preferably a chain alkylene group having 1 to 6 carbon atoms. In the case of a chain alkylene group having 1 to 6 carbon atoms, it may be a group containing a ring structure as a part of the chain alkylene group. The alkylene group having 1 to 6 carbon atoms may be linear or branched.

Among them, $R^{41}$ is preferably a chain alkylene group having 1 to 6 carbon atoms, a divalent aromatic hydrocarbon group having 6 to 10 carbon atoms (arylene group), a divalent alkylene group having 1 to 6 carbon atoms and containing an aromatic ring, a divalent alkylene group having 1 to 6 carbon atoms and containing a 5- or 6-membered ring containing two nitrogen atoms, or a divalent alkylene group having 1 to 6 carbon atoms and containing a 5- or 6-membered ring containing a nitrogen atom and an oxygen atom.

Preferred examples of the sulfonic acid (4) include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, and 2-hydroxy-3-morpholinopropanesulfonic acid.

It should be noted that these compounds are merely a part of the preferred sulfonic acid (4), and the preferred sulfonic acid (4) is not limited to these.

In addition, one type of these sulfonic acids (4) may be used, or two or more types thereof may be used in combination.

Among them, the sulfonic acid having a hydroxy group is preferably at least one member selected from the group consisting of 2-hydroxyethanesulfonic acid, 3-hydroxypropanesulfonic acid, hydroxybenzenesulfonic acid and hydroxy(methyl)benzenesulfonic acid.

It should be noted that in the case where the polyisocyanate composition of the present embodiment contains two or more amine salts of sulfonic acids, the sulfonic acids (4) may be the same as or different from each other.

Further, the sulfonic acid used for the polyisocyanate containing a sulfonic acid anion group in the molecule may form a salt with an amine compound described later.

(Sulfonic acid (5))

In the case where the active hydrogen group is an amino group, examples of the sulfonic acid having an amino group include a compound represented by the following general formula (5) (hereinafter abbreviated as "sulfonic acid (5)").

[Chemical Formula 12]

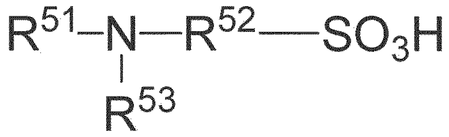

(5)

In the aforementioned general formula (5), $R^{51}$ and $R^{53}$ are each independently a hydrogen atom or a hydrocarbon group having 1 to 12 carbon atoms which may contain a hydroxy group. At least one of $R^{51}$ and $R^{53}$ is a hydrogen atom. $R^{52}$ is a hydrocarbon group having 1 to 12 carbon atoms which may contain a hydroxy group.

- $R^{51}$ and $R^{53}$

In the general formula (5), $R^{51}$ and $R^{53}$ are each independently a hydrogen atom or a hydrocarbon group having 1 to 12 carbon atoms which may contain a hydroxy group. $R^{51}$ and $R^{53}$ may be the same as or different from each other. At least one of $R^{51}$ and $R^{53}$ is a hydrogen atom. That is, in the case where $R^{51}$ is a hydrocarbon group having 1 to 12 carbon atoms which may contain a hydroxy group, $R^{53}$ is a hydrogen atom. Further, in the case where $R^{53}$ is a hydrocarbon group having 1 to 12 carbon atoms which may contain a hydroxy group, $R^{51}$ is a hydrogen atom. In addition, both $R^{51}$ and $R^{53}$ may be hydrogen atoms.

The hydrocarbon group having 1 to 12 carbon atoms may be a monovalent aliphatic hydrocarbon group having 1 to 12 carbon atoms, or a monovalent aromatic hydrocarbon group having 6 to 12 carbon atoms. The monovalent aliphatic hydrocarbon group having 1 to 12 carbon atoms is preferably a chain alkyl group having 1 to 6 carbon atoms or a cyclic alkyl group having 3 to 6 carbon atoms. The chain alkyl group having 1 to 6 carbon atoms may be linear or branched.

Among them, $R^{51}$ and $R^{53}$ are preferably a hydrogen atom, a chain alkyl group having 1 to 6 carbon atoms, or a cyclic alkyl group having 3 to 6 carbon atoms, respectively.

- $R^{52}$

$R^{52}$ is a hydrocarbon group having 1 to 12 carbon atoms which may contain a hydroxy group.

The hydrocarbon group having 1 to 12 carbon atoms may be a divalent aliphatic hydrocarbon group having 1 to 12 carbon atoms, or a divalent aromatic hydrocarbon group having 6 to 12 carbon atoms. The divalent aliphatic hydrocarbon group having 1 to 12 carbon atoms is preferably a chain alkylene group having 1 to 12 carbon atoms. The chain alkyl group having 1 to 12 carbon atoms may be linear or branched.

Among them, $R^{52}$ is preferably a divalent chain alkylene group having 1 to 6 carbon atoms or a divalent aromatic hydrocarbon group having 6 to 10 carbon atoms (arylene group).

Preferred examples of the sulfonic acid (5) include 2-aminoethanesulfonic acid, 3-aminopropanesulfonic acid, 2-methylaminoethanesulfonic acid, 3-methylaminopropanesulfonic acid, 2-cyclohexylaminoethanesulfonic acid, 3-cyclohexylaminopropanesulfonic acid, 3-cyclohexylaminoisobutylsulfonic acid, 4-cyclohexylaminobutanesulfonic acid, 2-cyclohexylmethylaminoethanesulfonic acid, 3-cyclohexylmethylaminopropanesulfonic acid, 3 -cyclohexylmethylaminoisobutylsulfonic acid, 4-cyclohexylmethylaminobutanesulfonic acid, 2-methylcyclohexylaminoethanesulfonic acid, 3-methylcyclohexylaminopropanesulfonic acid, 3-methylcyclohexylaminoisobutylsulfonic acid, 4-methylcyclohexylaminobutanesulfonic acid, 2-dimethylcyclohexylaminoethanesulfonic acid, 3-dimethylcyclohexylaminopropanesulfonic acid, 3-dimethylcyclohexylaminoisobutylsulfonic acid, 4-dimethylcyclohexylaminobutanesulfonic acid, 2-trimethylcyclohexylaminoethanesulfonic acid, 3-trimethylcyclohexylaminopropanesulfonic acid, 3-trimethylcyclohexylaminoisobutylsulfonic acid, 4-trimethylcyclohexylaminobutanesulfonic acid, 2-aminobenzenesulfonic acid, 3-aminobenzenesulfonic acid, 4-aminobenzenesulfonic acid, 2-(methylamino)benzenesulfonic acid, 3-(methylamino)benzenesulfonic acid, 4-(methylamino)benzenesulfonic acid, amino- methylbenzenesulfonic acid, amino-dimethylbenzene sulfonic acid, and aminonaphthalenesulfonic acid.

It should be noted that these compounds are merely a part of the preferred sulfonic acid (5), and the preferred sulfonic acid (5) is not limited to these.

In addition, one type of these sulfonic acids (5) may be used, or two or more types thereof may be used in combination.

Among them, the sulfonic acid having an amino group is preferably at least one member selected from the group consisting of 2-cyclohexylaminoethanesulfonic acid, 3-cyclohexylaminopropanesulfonic acid, 4-cyclohexylaminobutanesulfonic acid, 3-cyclohexylmethylaminopropanesulfonic acid, 3-(p-methylcyclohexylamino)propanesulfonic acid, 3-(3,3,5-trimethylcyclohexylamino)propanesulfonic acid, 4-(p-methylcyclohexylamino)butanesulfonic acid, 2-aminobenzenesulfonic acid, 2-amino-5-methylbenzenesulfonic acid, 2-amino-3,5-dimethylbenzenesulfonic acid, 5-amino-2-methylbenzenesulfonic acid (4-aminotoluene-2-sulfonic acid), 4-amino-2-methylbenzenesulfonic acid (5-aminotoluene-2-sulfonic acid), and 2-aminonaphthalene-4-sulfonic acid.

It should be noted that in the case where the polyisocyanate composition of the present embodiment contains two or more amine salts of sulfonic acids, the sulfonic acids (5) may be the same as or different from each other.

[Amine compound]

The polyisocyanate composition of the present embodiment contains a tertiary ammonium cation of an amine compound. Examples of the amine compound include an amine compound represented by the following general formula (1) (hereinafter sometimes referred to as "amine compound (1)"). The polyisocyanate composition of the present embodiment may include one type of the amine compound (1) alone, or may include two or more types thereof in combination.

It should be noted that the term "tertiary ammonium cation of an amine compound" as used herein refers to a protonated cation in which a proton ($H^+$) is coordinated to "N" in the amine compound.

In addition, in the polyisocyanate composition of the present embodiment, the amine compound may form a salt with the above sulfonic acid.

[Chemical Formula 13]

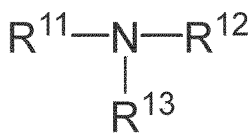

(1)

In the aforementioned general formula (1), $R^{11}$, $R^{12}$ and $R^{13}$ are each independently a hydrocarbon group having 1 to 10 carbon atoms which may contain an ether bond. At least one member selected from the group consisting of $R^{11}$, $R^{12}$ and $R^{13}$ may include a ring structure, and two or more members selected from the group consisting of $R^{11}$, $R^{12}$, and $R^{13}$ may be bonded to each other to form a ring structure. The aforementioned ring structure is an aromatic ring, a cycloalkyl group having 5 or 6 carbon atoms, a 5- or 6-membered ring in which $R^{11}$ and $R^{12}$ are bonded to each other, or a multiple ring composed of multiple members in which $R^{11}$, $R^{12}$ and $R^{13}$ are bonded to each other.

(Amine compound (1))

- $R^{11}$, $R^{12}$ and $R^{13}$

$R^{11}$, $R^{12}$ and $R^{13}$ are each independently a hydrocarbon group having 1 to 10 carbon atoms which may contain an ether bond.

The hydrocarbon group having 1 to 10 carbon atoms may be a monovalent aliphatic hydrocarbon group having 1 to 10 carbon atoms, a monovalent aromatic hydrocarbon group having 6 to 10 carbon atoms, or the like. The monovalent aliphatic hydrocarbon group having 1 to 10 carbon atoms is preferably a chain alkyl group having 1 to 10 carbon atoms or a cyclic alkyl group having 3 to 10 carbon atoms. In the case of a chain alkyl group having 1 to 10 carbon atoms, it may be a group containing an aromatic hydrocarbon as a part of the alkyl group. The chain alkyl group having 1 to 10 carbon atoms may be linear or branched.

Preferred examples of the amine compound (1) include those shown in the following (a) to (d), and the like. It

should be noted that these compounds are merely a part of the preferred amine compound (1), and the preferred amine compound (1) is not limited to these.

(a) Tertiary amines having a chain aliphatic hydrocarbon group such as trimethylamine, N,N-dimethylethylamine, N,N-dimethylpropylamine, N,N-dimethylisopropylamine, N,N-dimethylbutylamine, N,N-dimethylisobutylamine, N,N-dimethylpentylamine, N,N-dimethylhexylamine, N,N-dimethylheptylamine, N,N-dimethyloctylamine, N,N-dimethyl-2-ethylhexylamine, N,N-dimethylnonylamine, N,N-dimethyldecylamine, N,N-diethylmethylamine, triethylamine, N,N-diethylpropylamine, N,N-diethylisopropylamine, N,N-diethylbutylamine, N,N-diethylisobutylamine, N,N-diisopropylmethylamine, N,N-diisopropylethylamine, N,N-diethylpentylamine, N,N-diethylhexylamine, N,N-diethylheptylamine, N,N-diethyloctylamine, N,N-diethyl-2-ethylhexylamine, N,N-diethylnonylamine, N,N-diethyldecylamine, tripropylamine, N,N-diisopropylbutylamine, N,N-diisopropyl-2-ethylhexylamine, N,N-dibutylmethylamine, N,N-dibutylethylamine, N,N-dibutylpropylamine, tributylamine, N,N-dibutylpentylamine, N,N-dibutylhexylamine, N,N-dibutylheptylamine, N,N-dibutyloctylamine, N,N-dibutyl-2-ethylhexylamine, N,N-dibutylnonylamine, N,N-dibutyldecylamine, N,N-dimethylallylamine, N-methyldiallylamine, triamylamine, and trihexylamine;
(b) tertiary amines having a cyclic aliphatic hydrocarbon group such as N,N-dimethylcyclohexylamine, N,N-diethylcyclohexylamine, N,N-dicyclohexylmethylamine, N,N-dicyclohexylethylamine, and tricyclohexylamine;
(c) tertiary amines having an aromatic hydrocarbon group such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine;
(d) cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-methylmorpholine, N-ethylmorpholine, N-propylmorpholine, N-butylmorpholine, N-sec-butylmorpholine, N-tert-butylmorpholine, N-isobutylmorpholine and quinuclidine.

In addition, one type of these amine compounds may be used, or two or more types thereof may be used in combination.

Among them, the amine compound (1) is preferably at least one member selected from the group consisting of an amine compound containing a chain aliphatic hydrocarbon group and an amine compound containing a cyclic aliphatic hydrocarbon group.

Further, among them, the amine compound (1) is more preferably at least one member selected from the group consisting of N,N-dimethyl-2-ethylhexylamine, tripropylamine, tributylamine, N,N-diisopropylethylamine, N,N-dimethylcyclohexylamine, N,N-diethylcyclohexylamine, and N,N-dimethylbenzylamine.

Moreover, among them, the amine compound (1) is still more preferably at least one member selected from the group consisting of tripropylamine, tributylamine, N,N-diisopropylethylamine, N,N-dimethylcyclohexylamine, and N,N-diethylcyclohexylamine. The salts using these amine compounds tend to further improve the emulsifying capacity.

In addition, the polyisocyanate composition of the present embodiment may include, in place of a tertiary ammonium cation of one or more of the above-mentioned amine compounds (1), a tertiary ammonium cation of one or more amine compounds represented by the following general formula (2) (hereinafter sometimes referred to as "compound (2)") and a tertiary ammonium cation of one or more amine compounds represented by the following general formula (3) (hereinafter sometimes referred to as "compound (3)"), or tertiary ammonium cations of two or more of the above-mentioned amine compounds (2) in which total numbers of carbon atoms of $R^{21}$, $R^{22}$ and $R^{23}$ are different from each other.

[Chemical Formula 14]

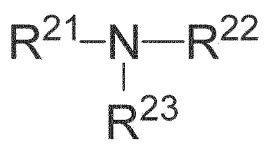

(2)

In the aforementioned general formula (2), $R^{21}$, $R^{22}$ and $R^{23}$ are each independently a hydrocarbon group having 1 to 6 carbon atoms which may contain an ether bond. At least one member selected from the group consisting of $R^{21}$, $R^{22}$ and $R^{23}$ may include a ring structure, and two or more members selected from the group consisting of $R^{21}$, $R^{22}$ and $R^{23}$ may be bonded to each other to form a ring structure. The aforementioned ring structure is an aromatic ring, a cycloalkyl group having 5 or 6 carbon atoms, a 5- or 6-membered ring in which $R^{21}$ and $R^{22}$ are bonded to each other, or a multiple ring composed of multiple members in which $R^{21}$, $R^{22}$ and $R^{23}$ are bonded to each other. The total number of carbon atoms of $R^{21}$, $R^{22}$ and $R^{23}$ is 8 or less.

[Chemical Formula 15]

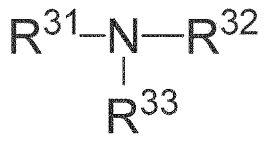

(3)

In the aforementioned general formula (3), $R^{31}$, $R^{32}$ and $R^{33}$ are each independently a hydrocarbon group having 1 to 19 carbon atoms which may contain an ether bond. At least one member selected from the group consisting of $R^{31}$, $R^{32}$ and $R^{33}$ may include a ring structure, and two or more members selected from the group consisting of $R^{31}$, $R^{32}$ and $R^{33}$ may be bonded to each other to form a ring structure. The aforementioned ring structure is an aromatic ring, a cycloalkyl group having 5 or 6 carbon atoms, a 5- or 6-membered ring in which $R^{31}$ and $R^{32}$ are bonded to each other, or a multiple ring composed of multiple members in which $R^{31}$, $R^{32}$ and $R^{33}$ are bonded to each other. The total number of carbon atoms of $R^{31}$, $R^{32}$ and $R^{33}$ is 9 or more.

(Amine compound (2))

- $R^{21}$, $R^{22}$ and $R^{23}$

In the general formula (2), $R^{21}$, $R^{22}$ and $R^{23}$ are each independently a hydrocarbon group having 1 to 6 carbon atoms which may contain an ether bond. $R^{21}$, $R^{22}$ and $R^{23}$ may be the same as or different from each other.
Further, the total number of carbon atoms of $R^{21}$, $R^{22}$ and $R^{23}$ is 8 or less. That is, the total number of carbon atoms of $R^{21}$, $R^{22}$ and $R^{23}$ is 3 or more and 8 or less.
The hydrocarbon group having 1 to 6 carbon atoms may be a monovalent aliphatic hydrocarbon group having 1 to 6 carbon atoms, or a monovalent aromatic hydrocarbon group having 6 carbon atoms. The monovalent aliphatic hydrocarbon group having 1 to 6 carbon atoms is preferably a chain alkyl group having 1 to 6 carbon atoms or a cyclic alkyl group having 3 to 6 carbon atoms. The chain alkyl group having 1 to 6 carbon atoms may be linear or branched.
Preferred examples of the amine compound (2) include those shown in the following (e) to (h), and the like. It should be noted that these compounds are merely a part of the preferred amine compound (2), and the preferred amine compound (2) is not limited to these.

(e) Tertiary amines having a chain aliphatic hydrocarbon group such as trimethylamine, N,N-dimethylethylamine, N,N-dimethylpropylamine, N,N-dimethylisopropylamine, N,N-dimethylbutylamine, N,N-dimethylisobutylamine, N,N-dimethylpentylamine, N,N-dimethylhexylamine, N,N-diethylmethylamine, triethylamine, N,N-diethylpropylamine, N,N-diethylisopropylamine, N,N-diethylbutylamine, N,N-diethylisobutylamine, N,N-diisopropylmethylamine, N,N-diisopropylethylamine, N,N-dimethylallylamine, and N-methyldiallylamine;
(f) tertiary amines having a cyclic aliphatic hydrocarbon group such as N,N-dimethylcyclohexylamine;
(g) tertiary amines having an aromatic hydrocarbon group such as N,N-dimethylphenylamine;
(h) cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-methylmorpholine, N-ethylmorpholine, N-propylmorpholine, N-butylmorpholine, N-sec-butylmorpholine, N-tert-butylmorpholine, N-isobutylmorpholine and quinuclidine.

In addition, one type of these amine compounds may be used, or two or more types thereof may be used in combination.
Among them, the amine compound (2) is preferably at least one member selected from the group consisting of a cyclic amine compound, an amine compound containing a chain aliphatic hydrocarbon group, and an amine compound containing a cyclic aliphatic hydrocarbon group.
In addition, among them, the amine compound (2) is more preferably at least one member selected from the group consisting of N,N-dimethylbutylamine, N,N-diethylmethylamine, triethylamine, N,N-diisopropylethylamine, N,N-dimethylcyclohexylamine, N-methylpiperidine, N-methylmorpholine, N-ethylpiperidine, N-ethylmorpholine and N-isobutylmorpholine.
Further, among them, the amine compound (2) is still more preferably at least one member selected from the group consisting of N,N-diethylmethylamine, triethylamine, N,N-diisopropylethylamine, N,N-dimethylcyclohexylamine, N-methylpiperidine, N-methylmorpholine and N-methylpyrrolidine. The salts using these amine compounds tend to further improve the emulsifying capacity.

(Amine compound (3))

($R^{31}$, $R^{32}$ and $R^{33}$)

In the general formula (3), $R^{31}$, $R^{32}$ and $R^{33}$ are each independently a hydrocarbon group having 1 to 19 carbon atoms which may contain an ether bond. $R^{31}$, $R^{32}$ and $R^{33}$ may be the same as or different from each other.

Further, the total number of carbon atoms of $R^{31}$, $R^{32}$ and $R^{33}$ is 9 or more. That is, the total number of carbon atoms of $R^{31}$, $R^{32}$ and $R^{33}$ is 9 or more and 57 or less.

The hydrocarbon group having 1 to 19 carbon atoms may be a monovalent aliphatic hydrocarbon group having 1 to 19 carbon atoms, a monovalent aromatic hydrocarbon group having 6 to 19 carbon atoms, or the like. The monovalent aliphatic hydrocarbon group having 1 to 19 carbon atoms is preferably a chain alkyl group having 1 to 19 carbon atoms or a cyclic alkyl group having 3 to 19 carbon atoms. In the case of a chain alkyl group having 1 to 19 carbon atoms, it may be a group containing an aromatic hydrocarbon as a part of the alkyl group. The chain alkyl group having 1 to 19 carbon atoms may be linear or branched.

Preferred examples of the amine compound (3) include those shown in the following (i) to (k), and the like. It should be noted that these compounds are merely a part of the preferred amine compound (3), and the preferred amine compound (3) is not limited to these.

(i) Tertiary amines having a chain aliphatic hydrocarbon group such as N,N-dimethylheptylamine, N,N-dimethyloctylamine, N,N-dimethyl-2-ethylhexylamine, N,N-dimethylnonylamine, N,N-dimethyldecylamine, N,N-dimethylundecylamine, N,N-dimethyldodecylamine, N,N-dimethyltridecylamine, N,N-dimethylstearylamine, N,N-diethylpentylamine, N,N-diethylhexylamine, N,N-diethylheptylamine, N,N-diethyloctylamine, N,N-diethyl-2-ethylhexylamine, N,N-diethylnonylamine, N,N-diethyldecylamine, N,N-diethylundecylamine, N,N-diethyldodecylamine, N,N-diethyltridecylamine, N,N-diethylstearylamine, tripropylamine, N,N-diisopropylbutylamine, N,N-diisopropyl-2-ethylhexylamine, N,N-dibutylmethylamine, N,N-dibutylethylamine, N,N-dibutylpropylamine, tributylamine, N,N-dibutylpentylamine, N,N-dibutylhexylamine, N,N-dibutylheptylamine, N,N-dibutyloctylamine, N,N-dibutyl-2-ethylhexylamine, N,N-dibutylnonylamine, N,N-dibutyldecylamine, N,N-dibutylundecylamine, N,N-dibutyldodecylamine, N,N-dibutyltridecylamine, N,N-dibutylstearylamine, triamylamine, and trihexylamine;

(j) tertiary amines having a cyclic aliphatic hydrocarbon group such as N,N-diethylcyclohexylamine, N,N-dicyclohexylmethylamine, N,N-dicyclohexylethylamine, and tricyclohexylamine;

(k) tertiary amines having an aromatic hydrocarbon group such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine.

In addition, one type of these amine compounds may be used, or two or more types thereof may be used in combination.

Among them, the amine compound (3) is preferably at least one member selected from the group consisting of an amine compound containing a chain aliphatic hydrocarbon group and an amine compound containing a cyclic aliphatic hydrocarbon group.

In addition, among them, the amine compound (3) is more preferably at least one member selected from the group consisting of N,N-dimethyl-2-ethylhexylamine, N,N-diisopropyl-2-ethylhexylamine, tripropylamine, tributylamine, N,N-diethylcyclohexylamine, N,N-dicyclohexylmethylamine, N,N-dimethylbenzylamine, and N,N-diethylbenzylamine.

Further, among them, the amine compound (3) is still more preferably at least one member selected from the group consisting of N,N-diisopropyl-2-ethylhexylamine, tripropylamine, tributylamine, and N,N-dicyclohexylmethylamine. The salts using these amine compounds tend to further improve the compatibility with polyisocyanates and increase the pot life.

In addition, from the viewpoint of the appearance (turbidity and yellowish tinge) of the composition, the polyisocyanate composition of the present embodiment preferably includes a tertiary ammonium cation of one or more of the above amine compounds (2) and a tertiary ammonium cation of one or more of the above amine compounds (3), or tertiary ammonium cations of two or more of the above amine compounds (2) in which the total numbers of carbon atoms of $R^{21}$, $R^{22}$ and $R^{23}$ are different from each other.

Further, in the polyisocyanate composition of the present embodiment, in the case where a tertiary ammonium cation of one or more of the above amine compounds (2) and a tertiary ammonium cation of one or more of the above amine compounds (3) are included, the ratio of the molar amount of the amine compound (3) with respect to the molar amount of the amine compound (2) is preferably 10/90 or more and 90/10 or less, more preferably 20/80 or more and 80/20 or less, and still more preferably 30/70 or more and 70/30 or less.

In addition, in the polyisocyanate composition of the present embodiment, in the case where tertiary ammonium cations of two or more of the above amine compounds (2) in which the total numbers of carbon atoms of $R^{21}$, $R^{22}$ and

$R^{23}$ are different from each other are included, it is preferable to include the above amine compound (2) in which the total number of carbon atoms of $R^{21}$, $R^{22}$ and $R^{23}$ is 6 or less and the above amine compound (2) in which the total number of carbon atoms of $R^{21}$, $R^{22}$ and $R^{23}$ is 7 or more. Moreover, it is more preferable to include the above amine compound (2) in which the total number of carbon atoms of $R^{21}$, $R^{22}$ and $R^{23}$ is 5 or less, and the above amine compound (2) in which the total number of carbon atoms of $R^{21}$, $R^{22}$ and $R^{23}$ is 7 or more. Furthermore, it is still more preferable to include the above amine compound (2) in which the total number of carbon atoms of $R^{21}$, $R^{22}$ and $R^{23}$ is 5 or less, and the above amine compound (2) in which the total number of carbon atoms of $R^{21}$, $R^{22}$ and $R^{23}$ is 8.

<Method for producing amine salt of sulfonic acid>

In the case where the above sulfonic acid forms a salt with the above amine compound, that is, in the case of an amine salt of the sulfonic acid, it can be obtained by, for example, mixing the sulfonic acid having an active hydrogen group with the amine compound to cause a neutralization reaction.

The neutralization reaction may be carried out in advance before reacting with the polyisocyanate, or may be carried out at the same time when reacting with the polyisocyanate. Alternatively, it may be carried out by adding the amine compound after reacting the polyisocyanate with the sulfonic acid having an active hydrogen group.

In the case where the active hydrogen group is a hydroxy group, the neutralization reaction is preferably carried out in advance before reacting with the polyisocyanate. Further, in the case where the active hydrogen group is an amino group, the neutralization reaction is preferably carried out at the same time when reacting with the polyisocyanate, or carried out by adding the amine compound after reacting the polyisocyanate with the sulfonic acid having an active hydrogen group.

In addition, in the case where the active hydrogen group is a hydroxy group, the ratio of mixing the sulfonic acid having a hydroxy group with the amine compound in the neutralization reaction is such that the molar ratio of ((sulfonic acid having a hydroxy group) / (amine compound)) is preferably 0.5 or more and 2 or less, and more preferably 0.8 or more and 1.5 or less.

In the case where the neutralization reaction is carried out in advance, although the temperature and the time can be appropriately determined according to the progress of the reaction, the temperature is usually preferably about 0°C or higher and 100°C or lower, and the mixing time is preferably about 10 minutes or more and 24 hours or less.

A solvent used in the preparation of the amine salt of the sulfonic acid having an active hydrogen group is preferably water or a hydrophilic solvent. Although the hydrophilic solvent is not particularly limited, examples thereof include alcohols, ether alcohols, ketones, and amide solvents. These solvents can be used alone or as a mixture.

Examples of the alcohols include methanol, ethanol, propanol, butanol, and isopropanol.

Examples of the ether alcohols include ethylene glycol monomethyl ether, ethylene glycol monoethyl ether, ethylene glycol monobutyl ether, diethylene glycol monoethyl ether, diethylene glycol monobutyl ether, propylene glycol monomethyl ether, propylene glycol monoethyl ether, and dipropylene glycol monomethyl ether.

Examples of the ketones include acetone, methyl ethyl ketone, and methyl isobutyl ketone.

Examples of the amide solvents include N,N-dimethylformamide and N,N-dimethylacetamide.

After the neutralization reaction, it is preferable to remove the water or the hydrophilic solvent.

<Characteristics of polyisocyanate composition>

[Content of uretdione dimer of diisocyanate monomer]

In the polyisocyanate composition of the present embodiment, the content of the uretdione dimer of the diisocyanate monomer is 2% by mass or more and 20% by mass or less, and preferably 2.4% by mass or more and 15% by mass or less with respect to the total mass of the polyisocyanate composition from the viewpoints of appearance, hardness, and water resistance when formed into a coating film.

Although the method for controlling the content of the uretdione dimer within the above range is not particularly limited, examples thereof include the method of adjusting the yield or heating time of the polyisocyanate described above in the section entitled "Method for producing polyisocyanate containing uretdione group".

It should be noted that the content of the uretdione dimer of the diisocyanate monomer can be measured by the method described in Examples described later.

[Content of uretdione dimer containing sulfonic acid anion group in the molecule]

In the polyisocyanate composition of the present embodiment, the content of the uretdione dimer containing a sulfonic acid anion group in the molecule is 0.15% by mass or less, preferably 0.1% by mass or less, and more preferably 0.05% by mass or less with respect to the total mass of the polyisocyanate containing a sulfonic acid anion group in the

molecule, the uretdione dimer and the isocyanurate trimer, from the viewpoints of water resistance and stain resistance when formed into a coating film.

Although the method for controlling the content of the uretdione dimer containing a sulfonic acid anion group in the molecule within the above range is not particularly limited, examples thereof include the method of adjusting the content of the uretdione dimer of the diisocyanate monomer described above.

It should be noted that the content of the uretdione dimer containing a sulfonic acid anion group in the molecule can be measured by the method described in Examples described later.

[Modification rate]

In the polyisocyanate composition of the present embodiment, from the viewpoints of water dispersibility and coating film physical properties, with respect to 100 moles of isocyanate groups of the raw material polyisocyanate, it is preferable that the isocyanate groups are modified, by the sulfonic acid having an active hydrogen group, at a ratio of 0.25 moles (mol%) or more and 50 moles (mol%) or less, it is more preferable that the isocyanate groups are modified at a ratio of 0.5 moles (mol%) or more and 20 moles (mol%) or less, and it is still more preferable that the isocyanate groups are modified at a ratio of 1.0 mole (mol%) or more and 10 moles (mol%) or less.

It should be noted that the modification rate is expressed as a ratio (mol%) of the isocyanate groups modified by the sulfonic acid or amine salt thereof with respect to 100 moles of the isocyanate groups of the raw material polyisocyanate, and can be calculated using the method shown in Examples described later.

[Isocyanate group content]

From the viewpoint of the solvent resistance of the coating film, the content of the isocyanate group of the polyisocyanate composition of the present embodiment is preferably 10% by mass or more and 25% by mass or less, and more preferably 15% by mass or more and 24% by mass or less, when the nonvolatile content is 100% by mass.

Although the method for controlling the content of the isocyanate group within the above range is not particularly limited, examples thereof include a method for adjusting the blending ratio of the sulfonic acid and the polyisocyanate.

It should be noted that the content of the isocyanate group can be measured by the method described in Examples described later.

[Number average molecular weight]

In addition, the number average molecular weight of the polyisocyanate (including the polyisocyanate containing a sulfonic acid anion group in the molecule and the unmodified polyisocyanate) used in the polyisocyanate composition of the present embodiment is preferably 450 or more and 2,000 or less, more preferably 500 or more and 1,800 or less, and still more preferably 550 or more and 1,550 or less from the viewpoint of coating film physical properties.

Although the method for controlling the number average molecular weight within the above range is not particularly limited, examples thereof include a method for adjusting the blending ratio of the sulfonic acid, the amine compound and the polyisocyanate.

It should be noted that the number average molecular weight can be measured by gel permeation chromatography (hereinafter sometimes referred to as "GPC").

[Average number of functional groups (average number of NCO groups)]

The average number of functional groups (average number of NCO groups) of the polyisocyanate (including the modified polyisocyanate and the unmodified polyisocyanate) used in the polyisocyanate composition of the present embodiment is preferably 1.8 or more and 6.2 or less, more preferably 2.0 or more and 5.6 or less, and still more preferably 2.5 or more and 4.6 or less from the viewpoints of the solvent resistance of the coating film and the retention ratio of the isocyanate group. Although the method for controlling the average number of the functional groups within the above range is not particularly limited, examples thereof include a method for adjusting the blending ratio of the sulfonic acid, the amine compound and the polyisocyanate.

It should be noted that the average number of functional groups can be calculated from the above isocyanate group content and the above number average molecular weight.

[Sulfur atom content]

In the polyisocyanate composition of the present embodiment, the sulfur atom content is preferably 0.1% by mass or more and 10% by mass or less, more preferably 0.2% by mass or more and 5.0% by mass or less, and still

more preferably 0.3% by mass or more and 2.0% by mass or less from the viewpoints of water dispersibility and coating film physical properties.

It should be noted that the sulfur atom content can be measured by ion chromatography (IC).

<Other components>

The polyisocyanate composition of the present embodiment is a composition including the above-described polyisocyanate containing a sulfonic acid anion group in the molecule (including a uretdione dimer containing a sulfonic acid anion group in the molecule and an isocyanurate trimer containing a sulfonic acid anion group in the molecule), an unmodified polyisocyanate (including a uretdione dimer and an isocyanurate trimer), and a tertiary ammonium cation of one or more amine compounds. The polyisocyanate composition of the present embodiment may include other components in addition to the polyisocyanate containing a sulfonic acid anion group in the molecule, the unmodified polyisocyanate, the tertiary ammonium cation of one or more amine compounds, the uretdione dimer of the diisocyanate and the isocyanurate trimer of the diisocyanate as described above. Although other components are not particularly limited, examples thereof include a solvent, an antioxidant, a light stabilizer, a polymerization inhibitor, and a surfactant.

The solvent used in the polyisocyanate composition of the present embodiment may be a hydrophilic solvent or a hydrophobic solvent. These solvents can be used alone or as a mixture.

Although the hydrophobic solvent is not particularly limited, examples thereof include mineral spirits, solvent naphtha, LAWS (Low Aromatic White Spirit), HAWS (High Aromatic White Spirit), toluene, xylene, cyclohexane, esters, ketones and amides.

Examples of the esters include ethyl acetate and butyl acetate.

Examples of the ketones include acetone, methyl ethyl ketone, methyl isobutyl ketone, and cyclohexanone.

Examples of the amides include N,N-dimethylformamide and N,N-dimethylacetamide.

Although the hydrophilic solvent is not particularly limited, examples thereof include alcohols, ethers, and esters of ether alcohols.

Examples of the alcohols include methanol, ethanol, propanol, isopropanol, and 2-ethylhexanol.

Examples of the ethers include diethylene glycol dimethyl ether, diethylene glycol diethyl ether, diethylene glycol dibutyl ether, and dipropylene glycol dimethyl ether.

Examples of the esters of ether alcohols include ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate, and dipropylene glycol monomethyl ether acetate.

In the polyisocyanate composition of the present embodiment, the content of the solvent is preferably 0% by mass or more and 90% by mass or less, more preferably 0% by mass or more and 50% by mass or less, and still more preferably 0% by mass or more and 30% by mass or less with respect to the total mass of the polyisocyanate composition.

Examples of the antioxidant and the light stabilizer include those shown in the following (a) to (e), and the like. These may be contained alone, or two or more of them may be contained.

(a) Aliphatic, aromatic or alkyl group-substituted aromatic esters of phosphoric acid or phosphorous acid, and hypophosphorous acid derivatives;
(b) phosphorus compounds such as phenylphosphonic acid, phenylphosphinic acid, diphenylphosphonic acid, polyphosphonate, dialkyl pentaerythritol diphosphite, and dialkyl bisphenol A diphosphite;
(c) phenolic derivatives (in particular, hindered phenol compounds);
(d) compounds containing sulfur such as thioether-based compounds, dithioic acid salt-based compounds, mercaptobenzimidazole-based compounds, thiocarbanilide-based compounds, and thiodipropionic acid esters;
(e) tin-based compounds such as tin maleate and dibutyltin monoxide.

Examples of the polymerization inhibitor include hydroquinones, phenols, cresols, catechols, and benzoquinones. Specific examples of the polymerization inhibitor include benzoquinone, p-benzoquinone, p-toluquinone, p-xyloquinone, naphthoquinone, 2,6-dichloroquinone, hydroquinone, trimethylhydroquinone, catechol, p-t-butylcatechol, 2,5-di-t-butylhydroquinone, monomethylhydroquinone, p-methoxyphenol, 2,6-di-t-butyl-p-cresol, and hydroquinone monomethyl ether. These may be contained alone, or two or more of them may be contained.

Examples of the surfactant include known anionic surfactants, cationic surfactants, and amphoteric surfactants.

In the polyisocyanate composition of the present embodiment, the total content of the antioxidant, the light stabilizer, the polymerization inhibitor, and the surfactant is preferably 0% by mass or more and 10% by mass or less, more preferably 0% by mass or more and 5% by mass or less, and still more preferably 0% by mass or more and 2% by mass or less with respect to the total mass of the polyisocyanate composition.

«Method for producing polyisocyanate composition»

The method for producing a polyisocyanate composition of the present embodiment preferably includes, for example, a step (A1) of mixing and reacting one or more amine salts of a sulfonic acid having an active hydrogen group with a polyisocyanate.

Alternatively, the method for producing a polyisocyanate composition of the present embodiment preferably includes, for example, a step (B1) of mixing and reacting a sulfonic acid having an active hydrogen group, a polyisocyanate, and one or more of the above amine compounds (1).

In addition, it is more preferable that the polyisocyanate composition of the present embodiment includes, for example, a step (A2) of mixing and reacting two or more amine salts of a sulfonic acid having an active hydrogen group with a polyisocyanate.

Alternatively, it is more preferable that the method for producing a polyisocyanate composition of the present embodiment includes, for example, a step (B2) of mixing and reacting a sulfonic acid having an active hydrogen group, and a polyisocyanate with one or more of the above amine compounds (2) and one or more of the above amine compounds (3), or two or more of the above amine compounds (2) in which the total numbers of carbon atoms of $R^{21}$, $R^{22}$ and $R^{23}$ are different from each other.

In step (A1) or step (A2), the amine salt of a sulfonic acid is preferably prepared in advance and then added to the polyisocyanate.

Further, in step (B1) or step (B2), the sulfonic acid having an active hydrogen group and the amine compound may be simultaneously added, or may be added sequentially, to the polyisocyanate.

In particular, in the case where the active hydrogen group is a hydroxy group, step (A1) or step (A2) is preferable, and it is more preferable that the amine salt of a sulfonic acid is prepared in advance and then added to the polyisocyanate.

In addition, in particular, in the case where the active hydrogen group is an amino group, step (B1) or step (B2) is preferable.

It should be noted that in the following, step (A1), step (A2), step (B1) and step (B2) may be collectively referred to as a "reaction step".

In the reaction step, from the viewpoints of water dispersibility and coating film physical properties, the mixing ratio of the sulfonic acid having an active hydrogen group or the amine salt thereof and the polyisocyanate is, in terms of the ratio of the molar amount of the isocyanate group with respect to the molar amount of the active hydrogen group (isocyanate group / active hydrogen group), preferably in the range of 2 to 400, more preferably in the range of 5 to 200, and still more preferably in the range of 10 to 100.

In the reaction step, although the reaction temperature and the reaction time can be appropriately determined in accordance with the progress of the reaction, the reaction temperature is preferably 0°C or higher and 150°C or lower, and the reaction time is preferably 30 minutes or more and 48 hours or less.

In addition, in the reaction step, a known ordinary catalyst may be used in some cases. Although the catalyst is not particularly limited, examples thereof include those shown in the following (a) to (f), and the like. These may be used alone or as a mixture.

(a) Organotin compounds such as tin octanoate, tin 2-ethyl-1-hexanoate, tin ethyl caproate, tin laurate, tin palmitate, dibutyltin oxide, dibutyltin dichloride, dibutyltin diacetate, dibutyltin dimaleate, dibutyltin dilaurate, dioctyltin diacetate, and dioctyltin dilaurate;
(b) organozinc compounds such as zinc chloride, zinc octanoate, zinc 2-ethyl-1-hexanoate, zinc 2-ethylcaproate, zinc stearate, zinc naphthenate, and zinc acetylacetonate;
(c) organotitanium compounds;
(d) organozirconium compounds;
(e) tertiary amines such as triethylamine, tributylamine, N,N-diisopropylethylamine, and N,N-dimethylethanolamine;
(f) diamines such as triethylenediamine, tetramethylethylenediamine, and 1,4-diazabicyclo [2.2.2] octane.

Moreover, after the above reaction step, an addition step for further adding and mixing an unmodified polyisocyanate (that is, a polyisocyanate containing no sulfonic acid anion group in the molecule) may be included.

In the method for producing a polyisocyanate composition of the present embodiment, a solvent may or may not be used. The solvent used in the method for producing a polyisocyanate composition of the present embodiment may be a hydrophilic solvent or a hydrophobic solvent. As the hydrophilic solvent and the hydrophobic solvent, the same as those exemplified above for the other components can be mentioned.

Further, in the method for producing a polyisocyanate composition of the present embodiment, in addition to the sulfonic acid having an active hydrogen group, the polyisocyanate, and the amine compound, at least one member selected from the group consisting of an antioxidant, a light stabilizer, a polymerization inhibitor, and a surfactant may be further added. As the antioxidant, the light stabilizer, the polymerization inhibitor and the surfactant, the same as

those exemplified above for the other components can be mentioned.

«Coating composition»

A coating composition of the present embodiment includes the polyisocyanate composition described above.
Although the coating composition of the present embodiment can also be used as an organic solvent-based coating composition, it is preferable to be used as a water-based coating composition in which resins serving as coating film-forming components are dissolved or dispersed in a medium mainly composed of water. In particular, it can also be used for coating materials for buildings, coating materials for automobiles, coating materials for automobile repair, coating materials for plastic, pressure-sensitive adhesives, adhesives, building materials, household aqueous coating materials, other coating agents, sealing agents, inks, casting materials, elastomers, foams, plastic raw materials, and fiber treatment agents.

<Resins>

Although the resin serving as the main agent is not particularly limited, examples thereof include acrylic resins, polyester resins, polyether resins, epoxy resins, fluororesins, polyurethane resins, polyvinylidene chloride copolymers, polyvinyl chloride copolymers, vinyl acetate copolymers, acrylonitrile butadiene copolymers, polybutadiene copolymers, and styrene butadiene copolymers.
Among them, acrylic resins or polyester resins are preferred as the resins.

(Acrylic resins)

Although the acrylic resins are not particularly limited, examples thereof include acrylic resins obtained by polymerizing a single monomer, or a mixture thereof, selected from the polymerizable monomers shown in the following (a) to (e), and the like. These acrylic resins may be used alone or as a mixture.

(a) (Meth)acrylic acid esters such as methyl (meth)acrylate, ethyl (meth)acrylate, isopropyl (meth)acrylate, n-butyl (meth)acrylate, 2-ethylhexyl (meth)acrylate, and lauryl (meth)acrylate;
(b) (meth)acrylic acid esters having an active hydrogen such as 2-hydroxyethyl (meth)acrylate, 2-hydroxypropyl (meth)acrylate, 2-hydroxybutyl (meth)acrylate, 3-hydroxypropyl (meth)acrylate, and 4-hydroxybutyl (meth) acrylate;
(c) unsaturated carboxylic acids such as acrylic acid, methacrylic acid, maleic acid and itaconic acid;
(d) unsaturated amides such as acrylamide, N-methylol acrylamide, and diacetone acrylamide;
(e) other polymerizable monomers such as glycidyl methacrylate, styrene, vinyl toluene, vinyl acetate, acrylonitrile, dibutyl fumarate, p-styrenesulfonic acid, and allylsulfosuccinic acid.

Although emulsion polymerization is generally used as a polymerization method thereof, suspension polymerization, dispersion polymerization, and solution polymerization can also be used. In the emulsion polymerization, the polymerization can also be carried out in a stepwise manner.

(Polyester resins)

Although the polyester resins are not particularly limited, examples thereof include polyester resins obtained by a condensation reaction of a carboxylic acid alone or a mixture thereof with a polyhydric alcohol alone or a mixture thereof.
Examples of the carboxylic acid include succinic acid, adipic acid, sebacic acid, dimer acid, maleic anhydride, phthalic anhydride, isophthalic acid, terephthalic acid, trimellitic acid, and pyromellitic acid.
Examples of the polyhydric alcohol include diols, triols, and tetraols.
Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethyl pentanediol, 2-butyl-2-ethyl-1,3-propanediol, and 2,2-diethyl-1,3-propanediol.
Examples of the triols include glycerin and trimethylolpropane.
Examples of the tetraols include diglycerin, dimethylolpropane, and pentaerythritol.
Alternatively, for example, polycaprolactones obtained by ring-opening polymerization of ε-caprolactone onto a hydroxy group of a low molecular weight polyol, and the like can also be used as the polyester resins.

(Polyether resins)

Examples of the polyether resins include those shown in the following (a) to (d), and the like.

(a) Polyether polyols obtained by adding an alkylene oxide alone, or a mixture thereof, to a polyhydric hydroxy compound alone, or a mixture thereof, using a strongly basic catalyst.

Examples of the polyhydric hydroxy compound include those shown in the following (i) to (vi).

(i) Diglycerin, ditrimethylolpropane, pentaerythritol, and dipentaerythritol;
(ii) sugar alcohol-based compounds such as erythritol, D-threitol, L-arabinitol, ribitol, xylitol, sorbitol, mannitol, galactitol, rhamnitol;
(iii) monosaccharides such as arabinose, ribose, xylose, glucose, mannose, galactose, fructose, sorbose, rhamnose, fucose, and ribodesose;
(iv) disaccharides such as trehalose, sucrose, maltose, cellobiose, gentiobiose, lactose, and melibiose;
(v) trisaccharides such as raffinose, gentianose and melezitose;
(vi) tetrasaccharides such as stachyose, and the like.

Examples of the strongly basic catalyst include hydroxides of lithium, sodium, potassium and the like, alcoholates, and alkylamines.
Examples of the alkylene oxide include ethylene oxide, propylene oxide, butylene oxide, cyclohexene oxide, and styrene oxide.
(b) Polyether polyols obtained by reacting an alkylene oxide with a polyamine compound.
Examples of the polyamine compound include ethylenediamines, and the like.
(c) Polyether polyols obtained by ring-opening polymerization of cyclic ethers.
Examples of the cyclic ethers include tetrahydrofuran and the like.
(d) The so-called polymer polyols obtained by polymerizing an acrylamide or the like using the polyether polyols obtained in (a) to (c) as a medium.
In addition, in the coating composition of the present embodiment, these resins can be used in combination with resins such as melamine-based curing agents, urethane dispersions, and urethane acrylic emulsions, if necessary.
Further, these resins are preferably emulsified, dispersed or dissolved in water. For this reason, it is possible to neutralize the carboxy groups, sulfone groups and the like contained in the resins.
Although the neutralizing agent for neutralizing the carboxy groups, sulfone groups and the like is not particularly limited, examples thereof include ammonia and water-soluble amino compounds.
Examples of the water-soluble amino compound include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. These may be used alone, or two or more types thereof may be used in combination.
Among them, the neutralizing agent is preferably a tertiary amine, and more preferably triethylamine or dimethylethanolamine.

<Other components>

In addition to the above-described polyisocyanate composition and resins, the coating composition of the present embodiment may further include, or combined with, inorganic pigments, organic pigments, extender pigments, silane coupling agents, titanium coupling agents, organophosphates, organic phosphites, thickening agents, leveling agents, thixotropic agents, antifoaming agents, freezing stabilizers, matting agents, crosslinking reaction catalysts (catalysts for accelerating curing), antiskinning agents, dispersing agents, wetting agents, fillers, plasticizers, lubricants, reducing agents, preservatives, antifungal agents, deodorants, anti-yellowing agents, ultraviolet absorbers, antistatic agents or electrostatic charge control agents, antisettling agents and the like which are generally added to coating materials.
Examples of the catalyst for accelerating curing include, but are not limited to, those shown in the following (a) or (b).

(a) Metal salts such as dibutyltin dilaurate, tin 2-ethylhexanoate, zinc 2-ethylhexanoate, and cobalt salts;
(b) tertiary amines such as triethylamine, pyridine, methylpyridine, benzyldimethylamine, N,N-dimethylcyclohexylamine, N-methylpiperidine, pentamethyldiethylenetriamine, N,N'-endoethylenepiperazine, and N,N'-dimethylpiperazine.

The coating composition of the present embodiment may further include a surfactant in addition to the above-described polyisocyanate composition and resins in order to improve the dispersibility in the coating material.

The coating composition of the present embodiment may further include an antioxidant, a light stabilizer, or a polymerization inhibitor in addition to the above-described polyisocyanate composition and resins in order to improve the storage stability of the coating material.

«Coated substrate»

A coated substrate of the present embodiment is a coated substrate coated with the above-described coating composition. The coated substrate of the present embodiment preferably has a coating layer containing the above-described coating composition.

The coated substrate of the present embodiment may be provided with a desired substrate and, in some cases, a normal primer prior to coating.

Examples of the substrate include metals, wood, glass, stones, ceramic materials, concrete, rigid and flexible plastics, textile products, leather products, and paper.

[Examples]

Hereinafter, the present embodiment will be described more specifically with reference to specific examples and comparative examples. However, the present embodiment is not limited in any way by the following examples and comparative examples unless it goes beyond the scope thereof. The physical properties and evaluations of polyisocyanate compositions in Examples and Comparative Examples were measured as follows. It should be noted that the terms "parts" and "%" refer to "parts by mass" and "% by mass", respectively, unless otherwise specified.

<Measurement method>

[Physical property 1] Viscosity

The viscosities of the polyisocyanate components obtained in examples and comparative examples were measured at 25°C using an E-type viscometer (manufactured by Tokimec Inc.). In the measurement, a standard rotor (1°34' × R24) was used. The number of rotations is as follows.

100 rpm (in the case of less than 128 mPa s)
50 rpm (in the case of 128 mPa s or more but less than 256 mPa s)
20 rpm (in the case of 256 mPa·or more but less than 640 mPa·s)
10 rpm (in the case of 640 mPa·s or more but less than 1,280 mPa·s)
5 rpm (in the case of 1,280 mPa·s or more but less than 2,560 mPa·s)
2.5 rpm (in the case of 2,560 mPa·s or more but less than 5,120 mPa·s)

[Physical property 2] Isocyanate group content (NCO group content)

Using the polyisocyanate compositions obtained in Examples and Comparative Examples as samples, the isocyanate group content was measured using the following method.

(1) 1 g of a sample was collected in a 200 mL Erlenmeyer flask, and 20 mL of toluene was added to the flask to dissolve the sample.
(2) Thereafter, 20 mL of a 2.0 N di-n-butylamine / toluene solution was added to the flask, and the resulting mixture was allowed to stand for 15 minutes.
(3) 70 mL of 2-propanol was added to the flask and dissolved to obtain a solution.
(4) The solution obtained in the above (3) was titrated with 1 mol/L hydrochloric acid to determine the sample titer.
(5) Even when no sample was added, the measurement was carried out in the same manner as in the above (1) to (3), and the blank titer was determined.

From the sample titer and blank titer determined above, the isocyanate group content was calculated using the following formula.

$$\text{Isocyanate group content [\% by mass]}$$

$$= ((\text{blank titer}) - (\text{sample titer})) \times 42 / [\text{sample mass (1 g)} \times 1{,}000] \times 100$$

[Physical property 3] Modification rate

The modification rate is a ratio of isocyanate groups modified by the sulfonic acid or amine salt thereof with respect to 100 moles of isocyanate groups in the polyisocyanate serving as a raw material. Using the polyisocyanate compositions obtained in Examples and Comparative Examples as samples, the modification rate was determined from the peak area ratio of an unmodified isocyanurate trimer, a singly modified isocyanurate trimer, a doubly modified isocyanurate trimer, and a triply modified isocyanurate trimer at 220 nm in liquid chromatography (LC). The apparatus and conditions are as follows. From each of the peak area ratios obtained, the modification rate was obtained by calculating the ratio of the peak area ratio of the modified isocyanurate trimer with respect to the total peak area ratio of the unmodified and modified isocyanurate trimers.

(Measurement conditions)

LC apparatus: UPLC (trade name), manufactured by Waters Corporation
Column: ACQUITYUPLC HSS T3 1.8 μm C18 2.1 mm (inner diameter) × 50 mm (length), manufactured by Waters Corporation
Flow rate: 0.3 mL/min
Mobile phase: x = 10 mM aqueous ammonium acetate solution, y = acetonitrile
Gradient conditions: the initial mobile phase composition was x/y = 98/2, the ratio of y was linearly increased after sample injection, and x/y = 0/100 was reached after 10 minutes.
Detection method: photodiode array detector, measurement wavelength: 220 nm

[Physical property 4] Qualitative analysis of amine compounds

Amine compounds contained in the modified polyisocyanates obtained in Examples and Comparative Examples were qualitatively analyzed based on the measurement of mass spectrometry after separation by pyrolysis gas chromatography using the following apparatus and conditions.

Pyrolyzer: FRONTIER LAB Py 3030D
Heating temperature: 600°C
Heating atmosphere: He
GC/MS apparatus: Agilent 6890/MSD 5975C
Column: DB-1
Column temperature: 40°C (5 minutes) → temperature increase at 20°C/minute → 300°C (holding for 11 minutes)
Column flow rate: 1.0 mL/min
Inlet temperature: 320°C
Injection method: split method (split ratio: 1/50)
Ion source temperature: 230°C
Interface temperature: 300°C
Ionization method: electron ionization method
Sample volume: 0.3 mg

[Physical property 5] Uretdione dimer content of diisocyanate monomer

Using the polyisocyanate composition as a sample, the area ratio of the uretdione dimer of the diisocyanate monomer with respect to the area of the entire polyisocyanate composition was determined by gel permeation chromatography measurement using the following apparatus, and the obtained ratio was taken as the uretdione dimer content of the diisocyanate monomer.

(Measurement conditions)

Apparatus: HLC-802A (manufactured by Tosoh Corporation)
Column: G1 000HXL × 1 (manufactured by Tosoh Corporation)
G2000HXL × 1 (manufactured by Tosoh Corporation)
G3000HXL × 1 (manufactured by Tosoh Corporation)
Carrier: tetrahydrofuran
Flow rate: 0.6 mL/min
Sample concentration: 1.0% by mass
Injection volume: 20 μL
Temperature: 40°C
Detection method: differential refractometer

[Physical property 6] Content of uretdione dimer containing sulfonic acid anion group in the molecule

Using the polyisocyanate composition as a sample, the following components (i) to (iv) were detected by LC-MS measurement using the following conditions and apparatus.

(i): Uretdione dimer of diisocyanate monomer containing no sulfonic acid anion group in the molecule
(ii): Uretdione dimer of diisocyanate monomer containing a sulfonic acid anion group in the molecule
(iii): Isocyanurate trimer of diisocyanate monomer containing no sulfonic acid anion group in the molecule
(iv): Isocyanurate trimer of diisocyanate monomer containing a sulfonic acid anion group in the molecule

(Measurement conditions)

LC apparatus: UPLC (trade name), manufactured by Waters Corporation
Column: ACQUITY UPLC HSS C18 1.8 μm 2.1 mm (inner diameter) × 50 mm (length), manufactured by Waters Corporation
Flow rate: 0.3 mL/min
Mobile phase: x = 10 mM aqueous ammonium acetate solution, y = acetonitrile
Gradient conditions: the initial mobile phase composition ratio was x/y = 98/2, the ratio of y was linearly increased after sample injection, and x/y = 0/100 was reached after 10 minutes.
Detection method: photodiode array detector, measurement wavelength: 200 nm
Ionization mode: electrospray ionization, positive and negative ion detection
Scan range: m/z 100 to 2,000

Furthermore, the content of the component (ii) was determined from the obtained peak area ratio of each component by using the following calculation formula.

$$\text{Content of component (ii) (\% by mass)} = [(\text{peak area ratio of component (ii)})/(\text{peak area ratios of component (i)} + \text{component (ii)} + \text{component (iii)} + \text{component (iv)})] \times 100$$

[Physical property 7] Yield

The yield of polyisocyanate was determined by measuring the refractive index of the reaction solution of polyisocyanate obtained in each production example.

[Evaluation 1] Water dispersibility of polyisocyanate composition

Using the polyisocyanate compositions obtained in Examples and Comparative Examples as samples, the water dispersibility was evaluated using the following method.

(1) The masses of a 100 mL flask and Yoshino paper were measured.
(2) The polyisocyanate composition was collected in a 100 mL flask so that the solid content became 16 g, and 24 g of deionized water was added thereto.
(3) After stirring the solution in the 100 mL flask at 200 rpm for 3 minutes using a propeller blade, the resulting solution was filtered with the Yoshino paper weighed in (1).
(4) The filtration residue remaining on the Yoshino paper and the residue remaining in the 100 mL flask were combined and heated in a dryer at 105°C for 1 hour to determine the mass (g).
(5) The ratio of the polyisocyanate composition dispersed in water was determined using the following formula.

Ratio of dispersion in water (% by mass)

= {1- (total mass (g) of the 100 mL flask and Yoshino paper containing the residue determined in (4)) - (total mass (g) of the 100 mL flask and Yoshino paper measured in (1)) / (mass (g) of the composition containing the modified polyisocyanate collected in (2) × nonvolatile content (% by mass))} × 100

Further, the evaluation criteria for water dispersibility were as follows.

(Evaluation criteria)

A: 80% by mass or more
B: 60% by mass or more and less than 80% by mass
C: Less than 60% by mass

[Evaluation 2] Appearance of coating film

(1) Production of coating composition

40 g of an aqueous acrylic polyol dispersion (product name: Setaqua 6510, hydroxy value per resin: 138 mg KOH/g, manufactured by Allnex) was weighed into a container. Subsequently, each polyisocyanate composition was added so that the ratio (NCO/OH) of the molar amount of isocyanate groups in the polyisocyanate compositions obtained in Examples and Comparative Examples with respect to the molar amount of hydroxy groups in the aqueous acrylic polyol dispersion was 1.25. Furthermore, deionized water was added so that the solid content in the coating composition was 42% by mass, and the resulting mixture was stirred at 600 rpm for 10 minutes using a propeller blade to obtain each coating composition.

(2) Evaluation of appearance of coating film

The coating composition obtained in (1) was used and coated on a glass plate to obtain a coating film having a thickness of 40 μm. Subsequently, the coating film was dried under an atmosphere of 23°C and 50% humidity, and on the next day, the obtained coating film was visually evaluated. The evaluation criteria for appearance were as follows.

(Evaluation criteria)

A: Transparent, with no spots, and satisfactory smoothness.
B: Transparent, with no spots, and poor smoothness.
C: Cloudy, or with some spots.

[Evaluation 3] Hardness of coating film

(1) Production of coating composition

A coating composition was prepared using the same method as in (1) in "Evaluation 2".

(2) Evaluation of hardness of coating film

The coating composition obtained in (1) was used and coated on a mild steel plate to obtain a coating film having a thickness of 40 μm. Subsequently, the coating film was dried under an atmosphere of 23°C and 50% humidity, and after 7 days, the pencil hardness of the obtained coating film was measured in accordance with ISO 15184. It should be noted that the hardness increases in the following order. Those having a pencil hardness of HB or more were evaluated as having satisfactory hardness.

(Rank of hardness)

2B < B < HB < F

[Evaluation 4] Water resistance of coating film

(1) Production of coating composition

A coating composition was prepared using the same method as in (1) in "Evaluation 2".

(2) Evaluation of water resistance of coating film

The coating composition obtained in (1) was used and coated on a glass plate with an applicator to a thickness of 40 μm. Subsequently, the resulting plate was dried under an atmosphere of 23°C and 50% humidity for 7 days to obtain a coating film. Next, a silicon O-ring having a diameter of 20 mm was placed on the obtained coating film, and 0.5 g of water was poured into it. Then, the resultant was left to stand at 23°C for 24 hours, and the state of the coating film after removing the water remaining on the surface was observed. The water resistance of the coating film was evaluated in accordance with the following evaluation criteria. However, the measurement was not possible for the coating film whose appearance was evaluated as "C" in the above "Evaluation 2", because the visual evaluation was not possible.

(Evaluation criteria)

A: No change.
B: Cloudy, with no blister generation.
C: Occurrence of blister generation, with cloudiness or coating film dissolution.

It should be noted that the term "blister" as used herein refers to bubbles and bulges generated on the surface of the coating film.

[Evaluation 5] Stain resistance of coating film

(1) Production of white plate

A solvent-based two-component urethane coating material (trade name: Mightylac (white), manufactured by Nipponpaint Co., Ltd.) was spray coated on an aluminum plate (150 mm × 75 mm × 1 mm, model number: A1050P (JIS H4000), manufactured by Testpiece Co., Ltd.) so as to achieve a dry film thickness of 50 μm. Thereafter, the resulting plate was allowed to stand under an atmosphere of 23 °C and 50% humidity for 2 weeks, and then the surface

was polished with No. 1,000 sandpaper to prepare a white plate.

(2) Production of coating composition

A coating composition was prepared using the same method as in (1) in "Evaluation 2".

(3) Evaluation of stain resistance of coating film

The coating composition obtained in (2) was used and coated on the white plate obtained in the above (1) with an applicator to a thickness of 40 μm. Subsequently, the resulting plate was dried under an atmosphere of 23°C and 50% humidity for 7 days to obtain a coating film. Next, a silicon O-ring having a diameter of 20 mm was placed on the obtained coating film, and 0.5 g of coffee was poured into it. Then, the resultant was left to stand at 23 °C for 24 hours, and the b value of the coating film after wiping off the coffee remaining on the surface was measured under the following conditions.

(Measurement conditions)

Apparatus: Color meter SM-P45, manufactured by Suga Test Instruments Co., Ltd.
Condition: 45° illumination, 0° light reception

Then, from the obtained measurement results, the stain resistance of the coating film was evaluated in accordance with the following evaluation criteria.

(Evaluation criteria)

A (Excellent stain resistance): The increase in b-value before and after the test is less than 1.5.
B (Moderate stain resistance): The increase in b-value before and after the test is 1.5 or more and less than 4.0.
C (Poor stain resistance): The increase in b-value before and after the test is 4.0 or more.

[Production Example 1] Production of polyisocyanate P-1

The inside of a four-necked flask equipped with a stirrer, a thermometer, a reflux condenser tube, a nitrogen blowing tube and a dropping funnel was replaced with a nitrogen atmosphere, 1,000 g of HDI and 4.0 g of isobutanol were charged thereto, and the temperature inside the reactor was maintained at 70°C under stirring. Tetramethylammonium caprylate was added thereto, and when the yield reached 50%, phosphoric acid was added to stop the reaction. Next, the temperature was raised to 160°C and maintained for 1 hour. After filtering the reaction solution, unreacted HDI was removed using a thin film evaporator to obtain a polyisocyanate P-1. The obtained polyisocyanate P-1 had a viscosity at 25°C of 900 mPa·s and an isocyanate group content of 22.3%.

[Production Example 2] Production of polyisocyanate P-2

A polyisocyanate P-2 was obtained in the same manner as in Production Example 1, except that the reaction was stopped by adding phosphoric acid when the yield reached 55%. The obtained polyisocyanate P-2 had a viscosity at 25°C of 1,200 mPa·s and an isocyanate group content of 22.6%.

[Production Example 3] Production of polyisocyanate P-3

A polyisocyanate P-3 was obtained in the same manner as in Production Example 1, except that the reaction was stopped by adding phosphoric acid when the yield reached 60%. The obtained polyisocyanate P-3 had a viscosity at 25°C of 1,350 mPa·s and an isocyanate group content of 22.1%.

[Production Example 4] Production of polyisocyanate P-4

1,000 g of HDI and 3.5 g of isobutanol were charged into the same apparatus as in Production Example 1, and

the temperature inside the reactor was maintained at 70°C under stirring. Tetramethylammonium caprylate was added thereto, and when the yield reached 40%, phosphoric acid was added to stop the reaction. Next, after filtering the reaction solution, unreacted HDI was removed using a thin film evaporator to obtain a polyisocyanate P-4. The obtained polyisocyanate P-4 had a viscosity at 25°C of 2,700 mPa·s and an isocyanate group content of 21.7%.

[Production Example 5] Production of polyisocyanate P-5

1,000 g of HDI and 1.5 g of 2-ethylhexanol were charged into the same apparatus as in Production Example 1, and the temperature inside the reactor was maintained at 70°C under stirring. Tetramethylammonium caprylate was added thereto, and when the yield reached 18%, phosphoric acid was added to stop the reaction, and then the temperature was raised to 160°C and maintained for 1 hour. After filtering the reaction solution, unreacted HDI was removed using a thin film evaporator to obtain a polyisocyanate P-5. The obtained polyisocyanate P-5 had a viscosity at 25°C of 500 mPa·s and an isocyanate group concentration of 23.3%.

[Production Example 6] Production of polyisocyanate P-6

1,000 g of HDI and 10 g of 1,3-butanediol were charged into the same apparatus as in Production Example 1, and the temperature inside the reactor was maintained at 60°C under stirring. Tri-n-butylphosphine was added thereto, and when the yield reached 25%, methyl p-toluenesulfonate was added to stop the reaction, and the temperature was raised to 80°C and maintained for 1 hour. Next, after removing unreacted HDI using a thin film evaporator, 63 g of an isocyanurate body of IPDI (product name: VESTANAT T1890, manufactured by Evonik Industries AG) was added and mixed to obtain a polyisocyanate P-6. The obtained polyisocyanate P-6 had a viscosity at 25°C of 3,000 mPa·s and an isocyanate group concentration of 20.0%.

[Production Example 7] Production of amine salt of sulfonic acid 1

10 parts by mass of 1-propanol were added to 20 parts by mass of a 70% by mass aqueous solution containing 2-hydroxyethanesulfonic acid and stirred to obtain a solution. Furthermore, N,N-dimethylcyclohexylamine was weighed so that the molar ratio with respect to 2-hydroxyethanesulfonic acid was 1, and diluted with 10 parts by mass of 1-propanol. Then, a diluted solution of N,N-dimethylcyclohexylamine was added dropwise to the 2-hydroxyethanesulfonic acid solution under stirring. One hour after the start of the dropwise addition, stirring was stopped, and dehydration and solvent removal were carried out using an evaporator to obtain an N,N-dimethylcyclohexylamine salt of 2-hydroxyethanesulfonic acid (hereinafter sometimes abbreviated as "HES / DMCHA") having a solid content of 99.8% by mass.

[Production Example 8] Production of amine salt of sulfonic acid 2

A tributylamine salt of 2-hydroxyethanesulfonic acid (hereinafter sometimes abbreviated as "HES/TBA") having a solid content of 99.8% by mass was obtained using the same method as in Production Example 1, except that tributylamine was used in place of N,N-dimethylcyclohexylamine.

[Production Example 9] Production of amine salt of sulfonic acid 3

An N,N-diisopropylethylamine salt of 2-hydroxyethanesulfonic acid (hereinafter sometimes abbreviated as "HES/DIPEA") having a solid content of 99.7% by mass was obtained using the same method as in Production Example 8, except that N,N-diisopropylethylamine was used in place of N,N-dimethylcyclohexylamine.

[Example 1] Production of polyisocyanate composition PA-1a

5.5 parts by mass of N,N-diisopropylethylamine salt of 2-hydroxyethanesulfonic acid (HES/DIPEA) obtained in Production Example 9 and 5.0 parts by mass of N,N-dimethylcyclohexylamine salt of 2-hydroxyethanesulfonic acid (HES/DMCHA) obtained in Production Example 7 were added to 100 parts by mass of the polyisocyanate P-4 obtained in Production Example 4, and the reaction was carried out so that the molar ratio of each amine became 1/1 by stirring the resulting mixture at 120°C for 3 hours under a nitrogen atmosphere. After completion of the reaction, 110 parts by mass of the polyisocyanate P-5 obtained in Production Example 5 were added and mixed to obtain a polyisocyanate composition PA-1a.

[Example 2] Production of polyisocyanate composition PA-2a

5.0 parts by mass of N,N-dimethylcyclohexylamine salt of 2-hydroxyethanesulfonic acid (HES/DMCHA) obtained in Production Example 7 and 6.15 parts by mass of tributylamine salt of 2-hydroxyethanesulfonic acid (HES/TBA) obtained in Production Example 8 were added to 100 parts by mass of the polyisocyanate P-4 obtained in Production Example 4, and the reaction was carried out so that the molar ratio of each amine became 1/1 by stirring the resulting mixture at 120°C for 3 hours under a nitrogen atmosphere. After completion of the reaction, 110 parts by mass of the polyisocyanate P-5 obtained in Production Example 5 were added and mixed to obtain a polyisocyanate composition PA-2a.

[Example 3] Production of polyisocyanate composition PA-3a

11.0 parts by mass of N,N-diisopropylethylamine salt of 2-hydroxyethanesulfonic acid (HES/DIPEA) obtained in Production Example 9 were added to 100 parts by mass of the polyisocyanate P-4 obtained in Production Example 4, and the reaction was carried out by stirring the resulting mixture at 120°C for 3 hours under a nitrogen atmosphere. After completion of the reaction, 111 parts by mass of the polyisocyanate P-3 obtained in Production Example 3 were added and mixed to obtain a polyisocyanate composition PA-3a.

[Example 4] Production of polyisocyanate composition PA-4a

11.5 parts by mass of N,N-dimethylcyclohexylamine salt of 2-hydroxyethanesulfonic acid (HES/DMCHA) obtained in Production Example 7 were added to 100 parts by mass of the polyisocyanate P-4 obtained in Production Example 4, and the reaction was carried out by stirring the resulting mixture at 120°C for 3 hours under a nitrogen atmosphere. After completion of the reaction, 112 parts by mass of the polyisocyanate P-2 obtained in Production Example 2 were added and mixed to obtain a polyisocyanate composition PA-4a.

[Example 5] Production of polyisocyanate composition PA-5a

12.0 parts by mass of tributylamine salt of 2-hydroxyethanesulfonic acid (HES/TBA) obtained in Production Example 8 were added to 100 parts by mass of the polyisocyanate P-4 obtained in Production Example 4, and the reaction was carried out by stirring the resulting mixture at 120°C for 3 hours under a nitrogen atmosphere. After completion of the reaction, 112 parts by mass of the polyisocyanate P-1 obtained in Production Example 2 were added and mixed to obtain a polyisocyanate composition PA-5a.

[Example 6] Production of polyisocyanate composition PA-6a

12.0 parts by mass of 3-cyclohexylaminopropanesulfonic acid (hereinafter sometimes abbreviated as "CAPS") and 7.0 parts by mass of N,N-dimethylcyclohexylamine (hereinafter sometimes abbreviated as "DMCHA") were added to 100 parts by mass of the polyisocyanate P-4 obtained in Production Example 4, and the reaction was carried out by stirring the resulting mixture at 80°C for 5 hours while refluxing under a nitrogen atmosphere. After completion of the reaction, 120 parts by mass of the polyisocyanate P-2 obtained in Production Example 2 were added and mixed to obtain a polyisocyanate composition PA-6a.

[Comparative Example 1] Production of polyisocyanate composition PA-1b

6.0 parts by mass of N,N-diisopropylethylamine salt of 2-hydroxyethanesulfonic acid (HES/DIPEA) obtained in Production Example 8 were added to 100 parts by mass of the polyisocyanate P-5 obtained in Production Example 5, and the reaction was carried out by stirring the resulting mixture at 120°C for 3 hours under a nitrogen atmosphere to obtain a polyisocyanate composition PA-1b.

[Comparative Example 2] Production of polyisocyanate composition PA-2b

10.9 parts by mass of 4-cyclohexylaminobutanesulfonic acid (hereinafter sometimes abbreviated as "CABS") and 6.0 parts by mass of N,N-diisopropylethylamine (DIPEA) were added to 100 parts by mass of the polyisocyanate P-6 obtained in Production Example 6, and the reaction was carried out by stirring the resulting mixture at 100°C for 5 hours while refluxing under a nitrogen atmosphere to obtain a polyisocyanate composition PA-2b.

[Comparative Example 3] Production of polyisocyanate composition PA-3b

5.4 parts by mass of N,N-dimethylcyclohexylamine salt of 2-hydroxyethanesulfonic acid (HES/DMCHA) obtained in Production Example 8 were added to 100 parts by mass of the polyisocyanate P-1 obtained in Production Example 1. Then, the reaction was carried out so that the ratio of the molar amount of isocyanate group with respect to the molar amount of hydroxy group (isocyanate group/hydroxy group) became 25 by stirring the resulting mixture at 120°C for 3 hours under a nitrogen atmosphere to obtain a polyisocyanate composition PA-3b.

[Comparative Example 4] Production of polyisocyanate composition PA-4b

A polyisocyanate composition PA-4b was obtained by the same method as in Comparative Example 1 except that the polyisocyanate P-2 obtained in Production Example 2 was used in place of the polyisocyanate P-5 obtained in Production Example 5.

[Comparative Example 5] Production of polyisocyanate composition PA-5b

A polyisocyanate composition PA-5b was obtained by the same method as in Comparative Example 2 except that the polyisocyanate P-3 obtained in Production Example 3 was used in place of the polyisocyanate P-6 obtained in Production Example 6.

The physical properties of the polyisocyanate compositions obtained in Examples and Comparative Examples were measured using the method described above, and evaluated by the method described above. The results are shown in Table 1.

[Table 1]

| | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| Polyisocyanate composition | PA-1a | PA-2a | PA-3a | PA-4a | PA-5a | PA-6a | PA-1b | PA-2b | PA-3b | PA-4b | PA-5b |
| Polyisocyanate | P-4/P-5 | P-4/P-5 | P-3/P-4 | P-2/P-4 | P-1/P-4 | P-2/P-4 | P-5 | P-6 | P-1 | P-2 | P-3 |
| Amine salt of sulfonic acid | HES/ DIPEA | HES/ DMCHA | HES/ DIPEA | HES/ DMCHA | HES/TBA | - | HES/ DIPEA | - | HES/ DMCHA | HES/ DIPEA | - |
| | HES/ DMCHA | HES/TBA | - | - | - | - | - | - | - | - | - |
| Sulfonic acid and amine compound | - | - | - | - | - | CAPS | - | CABS | - | - | CABS |
| | - | - | - | - | - | DMCHA | - | DIPEA | - | - | DIPEA |
| Molar ratio of amine compound (C8 or less / C9 or more) | 1.0 | 1.0 | - | - | - | - | - | - | - | - | - |
| [Physical property 1] Viscosity [mPa·s/ 25°C] | 2,400 | 2,800 | 4,800 | 4,400 | 3,500 | 4,300 | 1,400 | 4,500 | 2,500 | 2,800 | 3,200 |
| [Physical property 2] NCO group content [% by mass] | 20.8 | 20.3 | 19.6 | 19.5 | 20.2 | 20.3 | 21.5 | 17.4 | 20.4 | 21.0 | 20.2 |
| [Physical property 3] Modification rate [mol%] | 4.0 | 4.0 | 4.0 | 4.0 | 4.0 | 6.0 | 6.0 | 9.0 | 4.0 | 3.0 | 6.0 |
| [Physical property 5] Uretdione dimer content [% by mass] | 10.0 | 4.0 | 2.4 | 2.8 | 3.8 | 10.0 | 9.5 | 24.0 | 7.2 | 6.5 | 5.0 |
| [Physical property 6] Content of uretdione dimer containing sulfonic acid anion group in the molecule [% by mass] | 0.00 | 0.00 | 0.05 | 0.10 | 0.15 | 0.10 | 1.50 | 3.50 | 0.46 | 0.31 | 0.21 |
| Water dispersibility of polyisocyanate composition | A | A | A | A | A | A | A | A | A | A | A |
| Appearance of coating film | A | A | A | A | A | A | A | A | A | A | A |
| Pencil hardness of coating film | F | F | F | F | F | HB | 2B | HB | F | F | F |
| Water resistance of coating film | A | A | A | A | A | B | B | C | A | A | A |
| Stain resistance of coating film | A (0.8) | B (0.7) | A (0.9) | A (0.9) | A (1.0) | A (0.9) | B (3.2) | C (4.5) | B (1.8) | B (1.7) | B (1-6) |

From Table 1, it was confirmed that the polyisocyanate compositions PA-1a to PA-6a (Examples 1 to 6) were excellent in water dispersibility and could form coating films excellent in appearance, hardness, water resistance and stain resistance.

In addition, the hardness and water resistance of the coating films formed with the polyisocyanate compositions PA-1a to PA-5a (Example 1 to 5) using amine salts of sulfonic acid were particularly favorable compared to those obtained with the polyisocyanate composition PA-6a (Example 6) using a sulfonic acid and an amine compound.

On the other hand, among the polyisocyanate compositions PA-1b to PA-5b in which the content of the uretdione dimer containing a sulfonic acid anion group in the molecule was more than 0.15% by mass, it was not possible to obtain a polyisocyanate composition excellent in all of the water dispersibility of the polyisocyanate composition and the appearance, hardness, water resistance and stain resistance of the resulting coating film.

[Industrial Applicability]

The polyisocyanate composition of the present embodiment has excellent dispersibility in water or a main agent containing water, and is capable of forming a coating film having excellent appearance, hardness, water resistance and stain resistance. The coating composition of the present embodiment includes the above-mentioned polyisocyanate composition, and is suitably used as coating materials for buildings, coating materials for automobiles, coating materials for automobile repair, coating materials for plastic, pressure-sensitive adhesives, adhesives, building materials, household aqueous coating materials, other coating agents, sealing agents, inks, casting materials, elastomers, foams, plastic raw materials, and fiber treatment agents.

## Claims

1. A polyisocyanate composition comprising:

   a polyisocyanate containing a sulfonic acid anion group in a molecule;
   a tertiary ammonium cation of an amine compound;
   a uretdione dimer of a diisocyanate monomer; and
   an isocyanurate trimer of a diisocyanate monomer,
   wherein the tertiary ammonium cation of the amine compound comprises a tertiary ammonium cation of one or more amine compounds represented by the following general formula (1),
   a content of the uretdione dimer is 2.0% by mass or more and 20.0% by mass or less with respect to a total mass of the composition, and
   a content of a uretdione dimer containing a sulfonic acid anion group in a molecule is 0.15% by mass or less with respect to a total mass of the polyisocyanate containing a sulfonic acid anion group in a molecule, the uretdione dimer and the isocyanurate trimer,

[Chemical Formula 1]

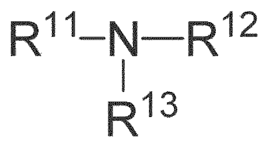

(1)

   wherein $R^{11}$, $R^{12}$ and $R^{13}$ are each independently a hydrocarbon group having 1 to 10 carbon atoms which may contain an ether bond;
   at least one member selected from the group consisting of $R^{11}$, $R^{12}$ and $R^{13}$ may include a ring structure, and two or more members selected from the group consisting of $R^{11}$, $R^{12}$, and $R^{13}$ may be bonded to each other to form a ring structure; and
   the ring structure is an aromatic ring, a cycloalkyl group having 5 or 6 carbon atoms, a 5- or 6-membered ring in which $R^{11}$ and $R^{12}$ are bonded to each other, or a multiple ring composed of multiple members in which $R^{11}$, $R^{12}$ and $R^{13}$ are bonded to each other.

2. The polyisocyanate composition according to Claim 1,
   wherein the tertiary ammonium cation of the amine compound comprises, in place of the tertiary ammonium cation

of one or more amine compounds represented by the general formula (1),
a tertiary ammonium cation of one or more amine compounds represented by the following general formula (2) and a tertiary ammonium cation of one or more amine compounds represented by the following general formula (3), or tertiary ammonium cations of two or more amine compounds represented by the general formula (2) in which total numbers of carbon atoms of $R^{21}$, $R^{22}$ and $R^{23}$ are different from each other,

[Chemical Formula 2]

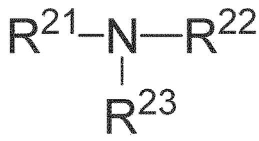

(2)

wherein $R^{21}$, $R^{22}$ and $R^{23}$ are each independently a hydrocarbon group having 1 to 6 carbon atoms which may contain an ether bond;
at least one member selected from the group consisting of $R^{21}$, $R^{22}$ and $R^{23}$ may include a ring structure, and two or more members selected from the group consisting of $R^{21}$, $R^{22}$ and $R^{23}$ may be bonded to each other to form a ring structure;
the ring structure is an aromatic ring, a cycloalkyl group having 5 or 6 carbon atoms, a 5- or 6-membered ring in which $R^{21}$ and $R^{22}$ are bonded to each other, or a multiple ring composed of multiple members in which $R^{21}$, $R^{22}$ and $R^{23}$ are bonded to each other; and
a total number of carbon atoms of $R^{21}$, $R^{22}$ and $R^{23}$ is 8 or less,

[Chemical Formula 3]

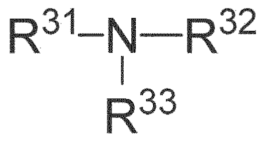

(3)

wherein $R^{31}$, $R^{32}$ and $R^{33}$ are each independently a hydrocarbon group having 1 to 19 carbon atoms which may contain an ether bond;
at least one member selected from the group consisting of $R^{31}$, $R^{32}$ and $R^{33}$ may include a ring structure, and two or more members selected from the group consisting of $R^{31}$, $R^{32}$ and $R^{33}$ may be bonded to each other to form a ring structure;
the ring structure is an aromatic ring, a cycloalkyl group having 5 or 6 carbon atoms, a 5- or 6-membered ring in which $R^{31}$ and $R^{32}$ are bonded to each other, or a multiple ring composed of multiple members in which $R^{31}$, $R^{32}$ and $R^{33}$ are bonded to each other; and
a total number of carbon atoms of $R^{31}$, $R^{32}$ and $R^{33}$ is 9 or more.

**3.** The polyisocyanate composition according to Claim 1,
wherein the polyisocyanate containing a sulfonic acid anion group in a molecule is obtained by reacting one or more amine salts of a sulfonic acid having an active hydrogen group with a polyisocyanate, and
the amine salt of a sulfonic acid having an active hydrogen group is a salt of a sulfonic acid having an active hydrogen group and one or more amine compounds represented by the general formula (1).

**4.** The polyisocyanate composition according to Claim 2,
wherein the polyisocyanate containing a sulfonic acid anion group in a molecule is obtained by reacting two or more amine salts of a sulfonic acid having an active hydrogen group with a polyisocyanate, and
the amine salt of a sulfonic acid having an active hydrogen group is a salt of a sulfonic acid having an active hydrogen group with one or more amine compounds represented by the general formula (2) and one or more amine compounds represented by the general formula (3), or
a salt of a sulfonic acid having an active hydrogen group with two or more amine compounds represented by the general formula (2).

**5.** The polyisocyanate composition according to Claim 3 or 4, wherein the active hydrogen group is a hydroxy group.

**6.** The polyisocyanate composition according to any one of Claims 3 to 5,
wherein the sulfonic acid having an active hydrogen group is a compound represented by the following general formula (4),
[Chemical Formula 4]

$$HO\text{-}R^{41}\text{-}SO_3H \qquad (4)$$

wherein $R^{41}$ is a hydrocarbon group having 1 to 10 carbon atoms which may contain at least one member selected from the group consisting of a hydroxy group, an ether bond, an ester bond, a carbonyl group, and an imino group;
$R^{41}$ may include a ring structure; and
the ring structure is an aromatic ring, a 5- or 6-membered ring containing two nitrogen atoms, or a 5- or 6-membered ring containing a nitrogen atom and an oxygen atom.

**7.** The polyisocyanate composition according to Claim 1 or 2,
wherein the polyisocyanate containing a sulfonic acid anion group in a molecule is obtained by reacting a sulfonic acid having an active hydrogen group with a polyisocyanate.

**8.** The polyisocyanate composition according to Claim 7, wherein the active hydrogen group is an amino group.

**9.** The polyisocyanate composition according to Claim 7 or 8,
wherein the sulfonic acid having an active hydrogen group is a compound represented by the following general formula (5),

[Chemical Formula 5]

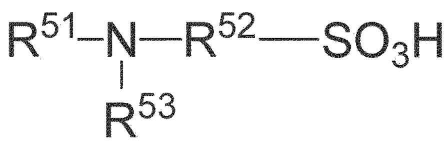

(5)

wherein $R^{51}$ and $R^{53}$ are each independently a hydrogen atom or a hydrocarbon group having 1 to 12 carbon atoms which may contain a hydroxy group;
at least one of $R^{51}$ and $R^{53}$ is a hydrogen atom; and
$R^{52}$ is a hydrocarbon group having 1 to 12 carbon atoms which may contain a hydroxy group.

**10.** The polyisocyanate composition according to any one of Claims 1 to 9,
wherein the amine compound represented by the general formula (1) and the amine compound represented by the general formula (3) is at least one member selected from the group consisting of an amine compound containing a chain aliphatic hydrocarbon group and an amine compound containing a cyclic aliphatic hydrocarbon group, and the amine compound represented by the general formula (2) is at least one member selected from the group consisting of a cyclic amine compound, an amine compound containing a chain aliphatic hydrocarbon group, and an amine compound containing a cyclic aliphatic hydrocarbon group.

**11.** The polyisocyanate composition according to any one of Claims 1 to 10,
wherein the polyisocyanate is at least one member selected from the group consisting of an aliphatic polyisocyanate, an alicyclic polyisocyanate, and an araliphatic polyisocyanate.

**12.** A method for producing a polyisocyanate composition,
the method comprising reacting:

(Al) one or more amine salts of a sulfonic acid having an active hydrogen group with a polyisocyanate; or
(B1) a sulfonic acid having an active hydrogen group with a polyisocyanate and one or more amine compounds represented by the following general formula (1),
so that a ratio of a molar amount of isocyanate groups with respect to a molar amount of active hydrogen groups

is within a range of 2 to 400,
wherein the amine salt of a sulfonic acid having an active hydrogen group is a salt of the sulfonic acid having an active hydrogen group and one or more amine compounds represented by the general formula (1),

[Chemical Formula 6]

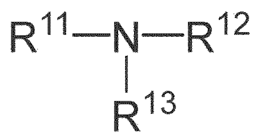

(1)

wherein $R^{11}$, $R^{12}$ and $R^{13}$ are each independently a hydrocarbon group having 1 to 10 carbon atoms which may contain an ether bond;
at least one member selected from the group consisting of $R^{11}$, $R^{12}$ and $R^{13}$ may include a ring structure, and two or more members selected from the group consisting of $R^{11}$, $R^{12}$, and $R^{13}$ may be bonded to each other to form a ring structure; and
the ring structure is an aromatic ring, a cycloalkyl group having 5 or 6 carbon atoms, a 5- or 6-membered ring in which $R^{11}$ and $R^{12}$ are bonded to each other, or a multiple ring composed of multiple members in which $R^{11}$, $R^{12}$ and $R^{13}$ are bonded to each other.

**13.** A method for producing a polyisocyanate composition,
the method comprising reacting:

(A2) two or more amine salts of a sulfonic acid having an active hydrogen group with a polyisocyanate; or
(B2) a sulfonic acid having an active hydrogen group, a polyisocyanate, and
one or more amine compounds represented by the following general formula (2) and one or more amine compounds represented by the following general formula (3), or
two or more amine compounds represented by the general formula (2) in which total numbers of carbon atoms of $R^{21}$, $R^{22}$ and $R^{23}$ are different from each other,
so that a ratio of a molar amount of isocyanate groups with respect to a molar amount of active hydrogen groups is within a range of 2 to 400,
wherein the amine salt of a sulfonic acid having an active hydrogen group is a salt of the sulfonic acid having an active hydrogen group with one or more amine compounds represented by the general formula (2) and one or more amine compounds represented by the general formula (3), or
a salt of the sulfonic acid having an active hydrogen group and two or more amine compounds represented by the general formula (2),

[Chemical Formula 7]

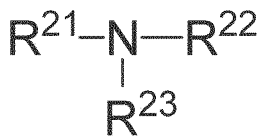

(2)

wherein $R^{21}$, $R^{22}$ and $R^{23}$ are each independently a hydrocarbon group having 1 to 6 carbon atoms which may contain an ether bond;
at least one member selected from the group consisting of $R^{21}$, $R^{22}$ and $R^{23}$ may include a ring structure, and two or more members selected from the group consisting of $R^{21}$, $R^{22}$ and $R^{23}$ may be bonded to each other to form a ring structure;
the ring structure is an aromatic ring, a cycloalkyl group having 5 or 6 carbon atoms, a 5- or 6-membered ring in which $R^{21}$ and $R^{22}$ are bonded to each other, or a multiple ring composed of multiple members in which $R^{21}$, $R^{22}$ and $R^{23}$ are bonded to each other; and
a total number of carbon atoms of $R^{21}$, $R^{22}$ and $R^{23}$ is 8 or less,

[Chemical Formula 8]

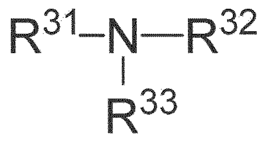

(3)

wherein $R^{31}$, $R^{32}$ and $R^{33}$ are each independently a hydrocarbon group having 1 to 19 carbon atoms which may contain an ether bond;
at least one member selected from the group consisting of $R^{31}$, $R^{32}$ and $R^{33}$ may include a ring structure, and two or more members selected from the group consisting of $R^{31}$, $R^{32}$ and $R^{33}$ may be bonded to each other to form a ring structure;
the ring structure is an aromatic ring, a cycloalkyl group having 5 or 6 carbon atoms, a 5- or 6-membered ring in which $R^{31}$ and $R^{32}$ are bonded to each other, or a multiple ring composed of multiple members in which $R^{31}$, $R^{32}$ and $R^{33}$ are bonded to each other; and
a total number of carbon atoms of $R^{31}$, $R^{32}$ and $R^{33}$ is 9 or more.

**14.** The method for producing a polyisocyanate composition according to Claim 12 or 13, wherein the active hydrogen group is at least one member selected from the group consisting of an amino group and a hydroxy group.

**15.** The method for producing a polyisocyanate composition according to any one of Claims 12 to 14,
wherein the sulfonic acid having an active hydrogen group is a compound represented by the following general formula (4),
[Chemical Formula 9]

$$HO\text{-}R^{41}\text{-}SO_3H \quad (4)$$

wherein $R^{41}$ is a hydrocarbon group having 1 to 10 carbon atoms which may contain at least one member selected from the group consisting of a hydroxy group, an ether bond, an ester bond, a carbonyl group, and an imino group; $R^{41}$ may include a ring structure; and
the ring structure is an aromatic ring, a 5- or 6-membered ring containing two nitrogen atoms, or a 5- or 6-membered ring containing a nitrogen atom and an oxygen atom.

**16.** The method for producing a polyisocyanate composition according to any one of Claims 13 to 15,
wherein a ratio of a molar amount of the amine compound represented by the general formula (3) with respect to a molar amount of the amine compound represented by the general formula (2) in the amine salt of a sulfonic acid is 10/90 or more and 90/10 or less.

**17.** A coating composition comprising the polyisocyanate composition according to any one of Claims 1 to 11.

**18.** A coated substrate coated with the coating composition according to Claim 17.

**INTERNATIONAL SEARCH REPORT**

International application No.
PCT/JP2019/012086

A. CLASSIFICATION OF SUBJECT MATTER
Int.Cl. C08G18/08(2006.01)i, C08G18/28(2006.01)i, C08G18/79(2006.01)i, C09D5/02(2006.01)i, C09D7/63(2018.01)i, C09D175/04(2006.01)i

According to International Patent Classification (IPC) or to both national classification and IPC

B. FIELDS SEARCHED

Minimum documentation searched (classification system followed by classification symbols)
Int.Cl. C08G18/08, C08G18/28, C08G18/79, C09D5/02, C09D7/63, C09D175/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A<br>X | WO 2017/154963 A1 (ASAHI KASEI CORPORATION) 14 September 2017, claims, examples & EP 3428207 A1 claims, examples & CN 108699204 A | 1-11<br>12-18 |
| A<br>X | JP 2016-17157 A (ASAHI KASEI CHEMICALS CORP.) 01 February 2016, claims, examples & CN 105254842 A | 1-11<br>12-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 June 2019 (14.06.2018) | 25 June 2019 (25.06.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2019/012086

C (Continuation). DOCUMENTS CONSIDERED TO BE RELEVANT

| Category* | Citation of document, with indication, where appropriate, of the relevant passages | Relevant to claim No. |
|---|---|---|
| A<br>X | JP 2015-205957 A (ASAHI KASEI CHEMICALS CORP.) 19 November 2015, claims, examples (Family: none) | 1-11<br>12-18 |
| A<br>X | JP 2003-533566 A (BAYER AG.) 11 November 2003, claims, examples & US 2004/0034162 A1 claims, examples & WO 2001/088006 A1 & EP 1287052 A1 & DE 10024624 A & AU 6899301 A & BR 110821 A & CN 1429240 A | 1-11<br>12-18 |
| A | JP 2015-127368 A (ASAHI KASEI CHEMICALS CORP.) 09 July 2015, claims, examples (Family: none) | 1-18 |
| A | JP 9-268212 A (BAYER AG.) 14 October 1997, claims, examples & US 5914383 A claims, examples & EP 798299 A1 & DE 19611849 A & CA 2200823 A & AT 248154 T & DK 798299 T & PT 798299 E & ES 2205081 T & MX 9702231 A & KR 10-0453869 B & CA 2200823 A1 | 1-18 |
| A | JP 2015-28163 A (ASAHI KASEI CHEMICALS CORP.) 12 February 2015, claims, examples & CN 104250363 A | 1-18 |
| A | JP 11-228653 A (NIPPON POLYURETHANE INDUSTRY CO., LTD.) 24 August 1999, claims, examples (Family: none) | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018062036 A
- JP H8176267 B
- JP 2015205957 A
- JP 2016017157 A
- JP 4806511 B
- WO 2015035673 A